# EUROPEAN PATENT APPLICATION

(11) **EP 4 192 106 A1**
(43) Date of publication of application: **07.06.2023**
(21) Application number: 21868498.3
(22) Date of filing: 06.09.2021
(51) Int. Cl.: H04W 36/00, H04W 36/06

(54) **COMMUNICATION METHOD AND APPARATUS**

(30) Priority: 18.09.2020 CN 202010988713
(71) Applicant: Huawei Technologies Co., Ltd., Shenzhen, Guangdong 518129 (CN)
(72) Inventor: TAO, Zhenyu, Shenzhen, Guangdong 518129 (CN); ZHANG, Youming, Shenzhen, Guangdong 518129 (CN); FAN, Yu, Shenzhen, Guangdong 518129 (CN); WANG, Caijuan, Shenzhen, Guangdong 518129 (CN)
(74) Representative: MERH-IP Matias Erny Reichl Hoffmann Patentanwälte PartG mbB
(86) International application number: PCT/CN2021/116798
(87) International publication number: WO 2022/057673

(57) **Abstract**

This application discloses a communication method and apparatus, and relates to the field of communication technologies, to reduce a terminal service failure probability in an interworking scenario. The method in this application includes: obtaining slice information of a session; sending a first message to a network function repository function network element; and receiving identification information of an intermediate session management function network element from the network function repository function network element, where the first message includes the slice information of the session, the first message requests the identification information of the intermediate session management function network element, the intermediate session management function network element is configured to manage an intermediate user plane function network element, and the intermediate user plane function network element is configured to forward service data between an access network device to which a terminal is connected and an anchor user plane function network element when the terminal moves out of a service area of the anchor user plane function network element and a service area of an anchor session management function network element.

## Description

This application claims priority to Chinese Patent Application No. 202010988713.9, filed with the China National Intellectual Property Administration on September 18, 2020 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

The 3rd generation partnership project (3rd generation partnership project, 3GPP) introduces a 5th generation (5th generation, 5G) communication system to Release 15. A 5G network supports three scenarios: enhanced mobile broadband (enhanced mobile broadband, eMBB), massive machine-type communication (massive machine-type communication, mMTC), and ultra-reliable and low-latency communication (ultra-reliable and low-latency communication, uRLLC). The three scenarios include diversified and differentiated applications. Services have different requirements on a latency, a connection quantity, reliability, security, and other aspects. For example, an augmented reality (augmented reality, AR) service requires an ultra-high network bandwidth of more than 1600 Mbps, an energy meter reading service requires a network to provide massive connections, and autonomous driving requires the network to ensure an end-to-end low latency of several milliseconds and high reliability of at least 99.999%.

3GPP introduces a network slicing technology to Release 15, to satisfy the requirements of the services in the 5G network on the different aspects. The network slicing technology enables operators to obtain a plurality of virtual networks by slicing hardware infrastructure, to allocate resources on demand and flexibly combine network functions, and satisfy the different requirements of the services.

During actual network deployment, the 5G network may fail to provide full coverage within short time. To ensure continuity of a terminal service, the network needs to support interworking between a 4G network and the 5G network. However, in some interworking scenarios, selected intermediate network devices such as an I-SMF and an I-UPF may not support the terminal service. Consequently, intermediate network devices need to be reselected, and a latency of an interworking procedure is increased.

### SUMMARY

This application provides a communication method and apparatus, to reduce a terminal service failure probability in an interworking scenario on the premise that a small interworking latency is ensured.

To achieve the foregoing objective, the following technical solutions are used in embodiments of this application.

According to a first aspect, a communication method is provided. The method includes: obtaining slice information of a session; sending a first message to a network function repository function network element; and receiving identification information of an intermediate session management function network element from the network function repository function network element. The first message includes the slice information of the session, the first message requests the identification information of the intermediate session management function network element, the intermediate session management function network element is configured to manage an intermediate user plane function network element. The intermediate user plane function network element is configured to forward service data between an access network device to which a terminal is connected and an anchor user plane function network element when the terminal moves out of a service area of the anchor user plane function network element and a service area of an anchor session management function network element.

In this way, an intermediate session management function network element that supports a slice service needed by the terminal can be found from the network function repository function network element based on the slice information of the session. The slice service needed by the terminal can be supported, and a terminal service failure probability can be reduced. In addition, there is usually no need to re-allocate an intermediate session management function network element, so that signaling overheads for re-allocation of the intermediate session management function network element are avoided, and an interworking latency is reduced.

In a possible design, when an initial access and mobility management function network element supports the slice information of the session, the method is performed by the initial access and mobility management function network element; or
when an initial access and mobility management function network element does not support the slice information of the session, the method is performed by a target access and mobility management function network element.

In a possible design, an initial access and mobility management function network element obtains the slice information of the session, a target access and mobility management function network element sends the first message to the network function repository function network element, and the target access and mobility management function network element receives the identification information of the intermediate session management function network element from the network function repository function network element.

In a possible design, the method further includes:
The initial access and mobility management function network element sends a second message to the network function repository function network element, where the second message is for querying for identification information of the target access and mobility management function network element; and
receives the identification information of the target access and mobility management function network element from the network function repository function network element.

In a possible design, the terminal corresponds to at least one session, each session corresponds to one anchor session management function network element, and the session corresponds to one piece of slice information; and
the obtaining slice information of a session includes: receiving slice information of the at least one session from an anchor session management function network element corresponding to the at least one session.

In a possible design, the receiving slice information of the session from an anchor session management function network element includes:
receiving a session context from the anchor session management function network element, where the session context includes the slice information of the session corresponding to the anchor session management function network element.

In a possible design, the obtaining slice information of a session includes:
receiving the slice information of the session from a mobility management entity.

In a possible design, the receiving the slice information of the session from a mobility management entity includes:
receiving a user context from the mobility management entity, where the user context includes the slice information of the session.

According to a second aspect, this application provides a communication method. The method includes: An initial access and mobility management function network element sends a third message to a terminal; receives identification information of the terminal from the terminal; sends a fourth message to a unified data management network element; and receives subscribed slice information of the terminal from the unified data management network element, where
the third message requests the identification information of the terminal, and the fourth message includes identification information of the terminal.

In this way, the initial access and mobility management function network element can obtain the identification information of the terminal from the terminal, and obtain the subscribed slice information from the unified data management network element by using the identification information. In a conventional technology, the initial access and mobility management function network element obtains the identification information of the terminal by receiving a context from an MME. In comparison, in this embodiment of this application, the initial access and mobility management function network element can obtain the identification information of the terminal from the terminal without depending on the MME in a live network, so that dependency on the live network is reduced, and an implementation is more flexible.

In a possible design, the identification information of the terminal is unencrypted identification information.

In a possible design, the identification information received from the terminal is encrypted identification information, and the identification information included in the fourth message is decrypted identification information.

The method further includes:
The initial access and mobility management function network element sends a fifth message to the unified data management network element, where the fifth message includes the encrypted identification information, and the fifth message is for obtaining the decrypted identification information.

The initial access and mobility management function network element receives the decrypted identification information from the unified data management network element.

According to a third aspect, this application provides a communication method. The method includes: A mobility management entity obtains slice information of a session; and sends the slice information to an initial access and mobility management function network element or a target access and mobility management function network element.

In a possible design, that a mobility management entity obtains slice information of a session includes:
The mobility management entity receives a session create response from an anchor session management function network element, where the session create response includes the slice information.

In a possible design, that the mobility management entity sends the slice information includes:
The mobility management entity sends a user context, where the user context includes the slice information.

In a possible design, the method further includes:
The mobility management entity sends the slice information to a domain name server; and receives identification information of the initial access and mobility management function network element from the domain name server.

According to a fourth aspect, this application provides a communication method. The method includes: An anchor user plane function network element obtains default slice information in an interworking procedure; and communicates with an intermediate user plane function network element based on the default slice information, where
when a terminal moves out of a service area of the anchor user plane function network element, the intermediate user plane function network element is configured to forward service data between the anchor user plane function network element and an access network device to which the terminal is connected.

In this way, in the interworking procedure, the A-UPF can learn of the default slice information. In this way, the A-UPF can communicate with the I-UPF by using a default slice, and the I-UPF can also communicate with the A-UPF by using the default slice. A tunnel between the A-UPF and the I-UPF can be available, and a probability of a communication failure caused by tunnel unavailability is reduced.

In a possible design, the method further includes:
In a registration procedure, the anchor user plane function network element obtains slice information of a session in a registration procedure; and communicates with the intermediate user plane function network element based on the slice information of the session.

In this way, in the registration procedure, the slice information of the A-UPF is updated to slice information of a real session, and therefore is consistent with slice information of the I-UPF in the registration procedure. Further, in the registration procedure, the A-UPF and the I-UPF may communicate with each other by using a real session slice, and it is ensured that the tunnel between the A-UPF and the I-UPF can be available.

In a possible design, the method further includes:
The anchor user plane function network element receives first indication information in the registration procedure, where the first indication information indicates to delete the default slice information; and
The anchor user plane function network element deletes the default slice information based on the first indication information.

According to a fifth aspect, this application provides a communication method. The method includes: receiving slice information of a session; and determining, based on the slice information of the session, that an intermediate session management function network element does not support a session slice service; and
sending a sixth message to a network function repository function network element, where the sixth message includes the slice information of the session, and the sixth message is for obtaining identification information of a target session management function network element; and receiving the identification information of the target session management function network element from the network function repository function network element.

In a possible design, the method is performed by an initial access and mobility management function network element or a target access and mobility management function network element.

According to a sixth aspect, a communication apparatus is provided. The apparatus includes a communication interface, configured to: obtain slice information of a session; send a first message to a network function repository function network element; and receive identification information of an intermediate session management function network element from the network function repository function network element, where the first message includes the slice information of the session, the first message requests the identification information of the intermediate session management function network element, the intermediate session management function network element is configured to manage an intermediate user plane function network element, and the intermediate user plane function network element is configured to forward service data between an access network device to which a terminal is connected and an anchor user plane function network element when the terminal moves out of a service area of the anchor user plane function network element and a service area of an anchor session management function network element.

In a possible design, when an initial access and mobility management function network element supports the slice information of the session, the apparatus is the initial access and mobility management function network element; or
when an initial access and mobility management function network element does not support the slice information of the session, the apparatus is a target access and mobility management function network element.

In a possible design, the communication interface is further configured to: send a second message to the network function repository function network element, where the second message is for querying for identification information of a target access and mobility management function network element; and receive the identification information of the target access and mobility management function network element.

In a possible design, the terminal corresponds to at least one session, each session corresponds to one anchor session management function network element, and the session corresponds to one piece of slice information; and
that the communication interface is configured to obtain the slice information of the session includes: receiving slice information of the at least one session from an anchor session management function network element corresponding to the at least one session.

In a possible design, that the communication interface is configured to receive slice information of the session from an anchor session management function network element includes:
receiving a session context from the anchor session management function network element, where the session context includes the slice information of the session corresponding to the anchor session management function network element.

In a possible design, that the communication interface is configured to obtain the slice information of the session includes:
receiving the slice information of the session from a mobility management entity.

In a possible design, that the communication interface is configured to receive the slice information of the session from a mobility management entity includes: receiving a user context from the mobility management entity, where the user context includes the slice information of the session.

According to a seventh aspect, this application provides a communication apparatus. The apparatus includes a processor and a communication interface. The processor is configured to control the communication interface to perform the following operations:
sending a third message to a terminal; receiving identification information of the terminal from the terminal sending a fourth message to a unified data management network element; and receiving subscribed slice information of the terminal from the unified data management network element, where
the third message requests the identification information of the terminal, and the fourth message includes identification information of the terminal.

In a possible design, the identification information of the terminal is unencrypted identification information.

In a possible design, the identification information received from the terminal is encrypted identification information, and the identification information included in the fourth message is decrypted identification information.

The processor is further configured to control the communication interface to perform the following operations:
sending a fifth message to the unified data management network element, where the fifth message includes the encrypted identification information, and the fifth message is for obtaining the decrypted identification information and
receiving the decrypted identification information from the unified data management network element.

According to an eighth aspect, this application provides a communication apparatus. The apparatus may be a mobility management entity or an apparatus that supports the mobility management entity in implementing a function of the mobility management entity, for example, a chip system of the mobility management entity. The apparatus includes a communication interface, configured to obtain slice information of a session; and send the slice information to an initial access and mobility management function network element or a target access and mobility management function network element.

In a possible design, that the communication interface is configured to obtain the slice information of the session includes:
receiving a session create response from an anchor session management function network element, where the session create response includes the slice information.

In a possible design, that the communication interface is configured to send the slice information includes:
sending a user context, where the user context includes the slice information.

In a possible design, the communication interface is further configured to send the slice information to a domain name server; and receive identification information of the initial access and mobility management function network element from the domain name server.

According to a ninth aspect, this application provides a communication apparatus. The apparatus may be an anchor user plane function network element or an apparatus that supports the anchor user plane function network element in implementing a function of the anchor user plane function network element, for example, a chip system of the anchor user plane function network element. The apparatus includes a processor and a communication interface.

The processor is configured to control the communication interface to obtain default slice information in an interworking procedure; and control the communication interface to communicate with an intermediate user plane function network element based on the default slice information.

When a terminal moves out of a service area of the anchor user plane function network element, the intermediate user plane function network element is configured to forward service data between the anchor user plane function network element and an access network device to which the terminal is connected.

In a possible design, the communication interface is further configured to:
In a registration procedure, the anchor user plane function network element obtains slice information of a session in a registration procedure; and communicates with the intermediate user plane function network element based on the slice information of the session.

In a possible design, the communication interface is further configured to: The anchor user plane function network element receives first indication information in the registration procedure, where the first indication information indicates to delete the default slice information.

The processor is further configured to delete the default slice information based on the first indication information.

According to a tenth aspect, this application provides a communication apparatus. The apparatus includes:
a communication interface, configured to receive slice information of a session; and
a processor, configured to determine, based on the slice information of the session, that an intermediate session management function network element does not support a session slice service, where
the communication interface is further configured to: send a sixth message to a network function repository function network element, where the sixth message includes the slice information of the session, and the sixth message is for obtaining identification information of a target session management function network element; and receive the identification information of the target session management function network element from the network function repository function network element.

In a possible design, the apparatus is an initial access and mobility management function network element or a target access and mobility management function network element.

According to an eleventh aspect, this application provides a communication apparatus, configured to implement functions of the communication method in any one of the foregoing aspects.

According to a twelfth aspect, this application provides a communication apparatus. The apparatus has a function of implementing the communication method in any possible design of any one of the foregoing aspects. The function may be implemented by using hardware, may be implemented by hardware executing corresponding software, or may be implemented by using a combination of software and hardware. The hardware or the software includes one or more modules corresponding to the foregoing functions.

According to a thirteenth aspect, a communication apparatus is provided, and includes a processor and a memory. The memory is configured to store computer-executable instructions. When the communication apparatus runs, the processor executes the computer-executable instructions stored in the memory, so that the communication apparatus performs the communication method in any possible design of any one of the foregoing aspects.

According to a fourteenth aspect, a communication apparatus is provided, and includes a processor. The processor is configured to: after being coupled to a memory and reading instructions in the memory, perform the communication method in any possible design of any one of the foregoing aspects according to the instructions.

According to a fifteenth aspect, an embodiment of this application provides a communication apparatus, including: a processor and an interface circuit. The interface circuit is configured to receive code instructions and transmit the code instructions to the processor. The processor is configured to run the code instructions to perform the communication method in any possible design of any one of the foregoing aspects.

According to a sixteenth aspect, an embodiment of this application provides a communication apparatus. The apparatus may be a chip system. The chip system includes a processor, may optionally further include a memory, and is configured to implement functions of the method according to any one of the foregoing aspects. The chip system may include a chip, or may include the chip and another discrete component.

According to a seventeenth aspect, a communication apparatus is provided. The apparatus may be a circuit system. The circuit system includes a processing circuit. The processing circuit is configured to perform the communication method in any possible design of any one of the foregoing aspects.

According to an eighteenth aspect, an embodiment of this application further provides a computer-readable storage medium, including instructions. When the instructions are run on a computer, the computer is enabled to perform the method in any one of the foregoing aspects.

According to a nineteenth aspect, an embodiment of this application further provides a computer program product, including instructions. When the instructions are run on a computer, the computer is enabled to perform the method in any one of the foregoing aspects.

According to a twentieth aspect, this application provides a communication system, including:
an initial access and mobility management function network element, configured to obtain slice information of a session, and send the slice information of the session to a target access and mobility management function network element; and
the target access and mobility management function network element, configured to receive the slice information of the session from the initial access and mobility management function network element, where
the target access and mobility management function network element is further configured to send a first message to a network function repository function network element, where the first message includes the slice information of the session, the first message requests identification information of an intermediate session management function network element, the intermediate session management function network element is configured to manage an intermediate user plane function network element, and the intermediate user plane function network element is configured to forward service data between an access network device to which a terminal is connected and an anchor user plane function network element when the terminal moves out of a service area of the anchor user plane function network element and a service area of an anchor session management function network element; and
the target access and mobility management function network element is further configured to receive the identification information of the intermediate session management function network element from the network function repository function network element.

In a possible design, the initial access and mobility management function network element is further configured to send a second message to the network function repository function network element, where the second message is for querying for identification information of the target access and mobility management function network element; and
the initial access and mobility management function network element is further configured to receive the identification information of the target access and mobility management function network element from the network function repository function network element.

In a possible design, the terminal corresponds to at least one session, each session corresponds to one anchor session management function network element, and the session corresponds to one piece of slice information; and
that the initial access and mobility management function network element is configured to obtain the slice information of the session includes: receiving slice information of the at least one session from an anchor session management function network element corresponding to the at least one session.

In a possible design, receiving the slice information of the session from the anchor session management function network element includes:
receiving a session context from the anchor session management function network element, where the session context includes the slice information of the session corresponding to the anchor session management function network element.

In a possible design, that the initial access and mobility management function network element is configured to obtain the slice information of the session includes:
receiving the slice information of the session from a mobility management entity.

In a possible design, receiving the slice information of the session from the mobility management entity includes:
receiving a user context from the mobility management entity, where the user context includes the slice information of the session.

According to a twenty-first aspect, an embodiment of this application provides a system. The system includes the initial access and mobility management function network element, the target access and mobility management function network element, the anchor session management function network element, the mobility management entity, the terminal, and/or the anchor user plane function network element in any aspect.

### BRIEF DESCRIPTION OF DRAWINGS

FIG. 1A and FIG. 1B are a schematic diagram of a preparation phase of a handover procedure according to an embodiment of this application;
FIG. 2A and FIG. 2B are a schematic diagram of an execution phase of a handover procedure according to an embodiment of this application;
FIG. 3A and FIG. 3B are a schematic diagram of a relocation procedure according to an embodiment of this application;
FIG. 4, FIG. 5(a), and FIG. 5(b) each are a schematic diagram of a system architecture according to an embodiment of this application;
FIG. 6 is a schematic diagram of network slices according to an embodiment of this application;
FIG. 7 is a schematic diagram of a structure of a communication apparatus according to an embodiment of this application;
FIG. 8 to FIG. 18B each are a schematic flowchart of a communication method according to an embodiment of this application; and
FIG. 19 is a schematic diagram of a structure of a communication apparatus according to an embodiment of this application.

### DESCRIPTION OF EMBODIMENTS

In the specification and accompanying drawings of this application, the terms "first", "second", and the like are intended to distinguish between different objects or to distinguish between different processing for a same object, but do not indicate a particular order of objects.

"At least one" means one or more.

"A plurality of" means two or more.

"And/or" describes an association relationship between associated objects, and represents that three relationships may exist. For example, A and/or B may represent the following cases: Only A exists, both A and B exist, and only B exists, where A and B may be singular or plural.

The character "/" generally indicates an "or" relationship between the associated objects. For example, A/B may represent A or B.

In addition, the terms "include", "have", and any variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It can be noted that, in embodiments of this application, the word such as "exemplary" or "for example" is for representing giving an example, an illustration, or a description. Any embodiment or design scheme described as "exemplary" or "for example" in embodiments of this application should not be explained as being more preferred or having more advantages than another embodiment or design scheme. Exactly, use of the word such as "exemplary" or "for example" is intended to present a relative concept in a specific manner.

In the specification and accompanying drawings of this application, "of (of)", corresponding, relevant "(corresponding, relevant)", and "corresponding (corresponding)" may be interchangeably used sometimes. It can be noted that meanings expressed by the terms are consistent when differences between the terms are not emphasized.

That a network element A sends a message to a network element B may be that the network element A directly sends the message to the network element B, or may be that the network element A sends the message to the network element B via another intermediate network element.

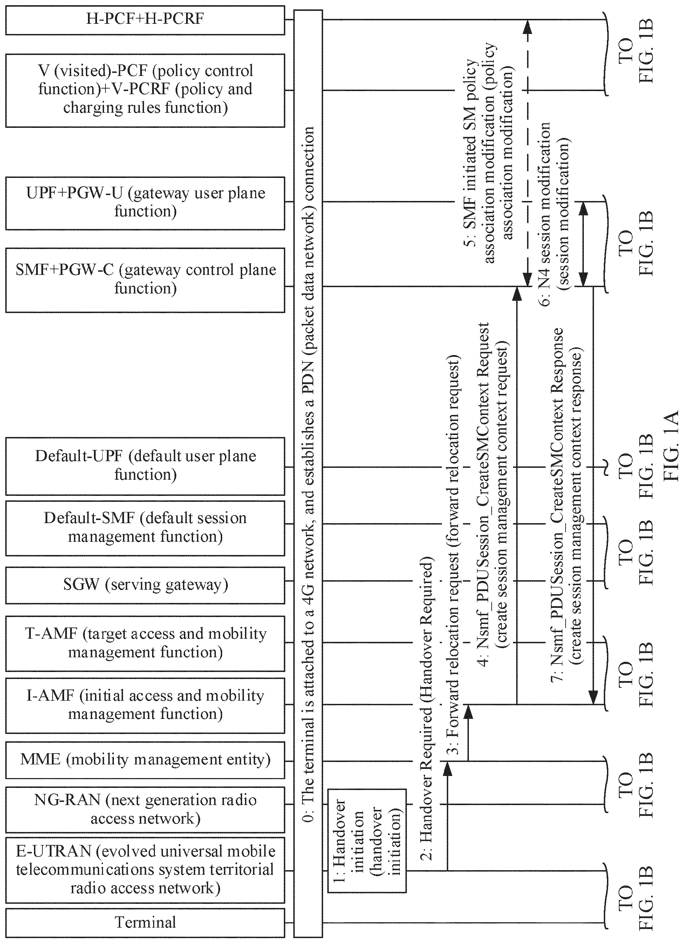

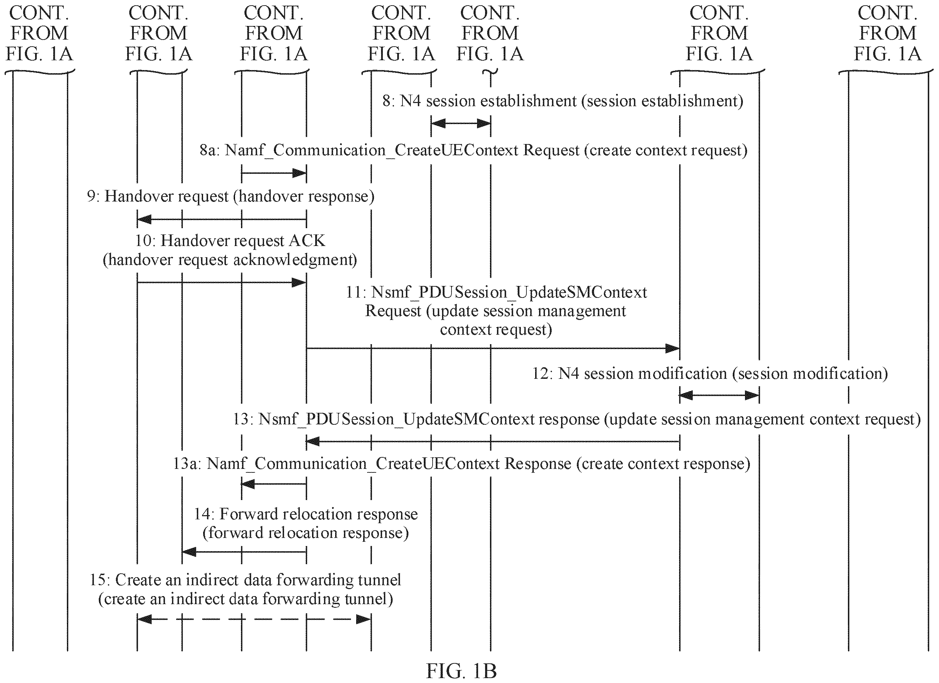

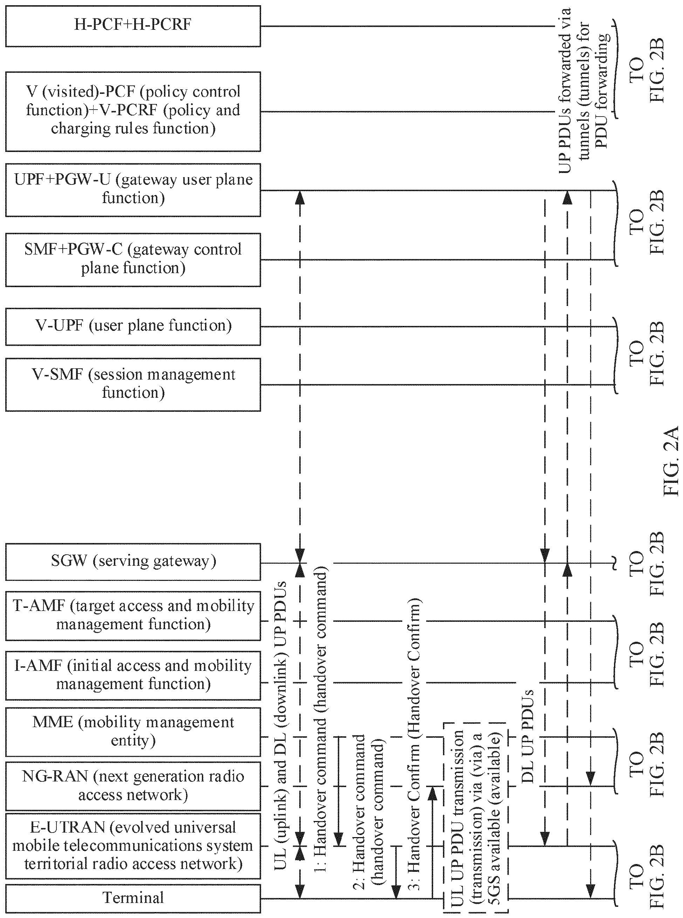

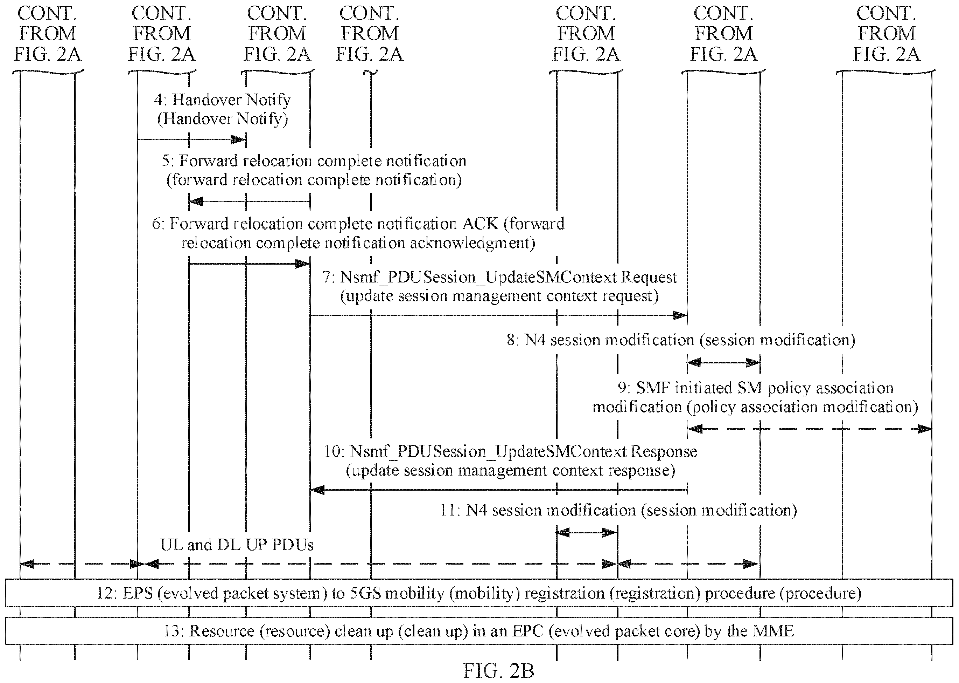

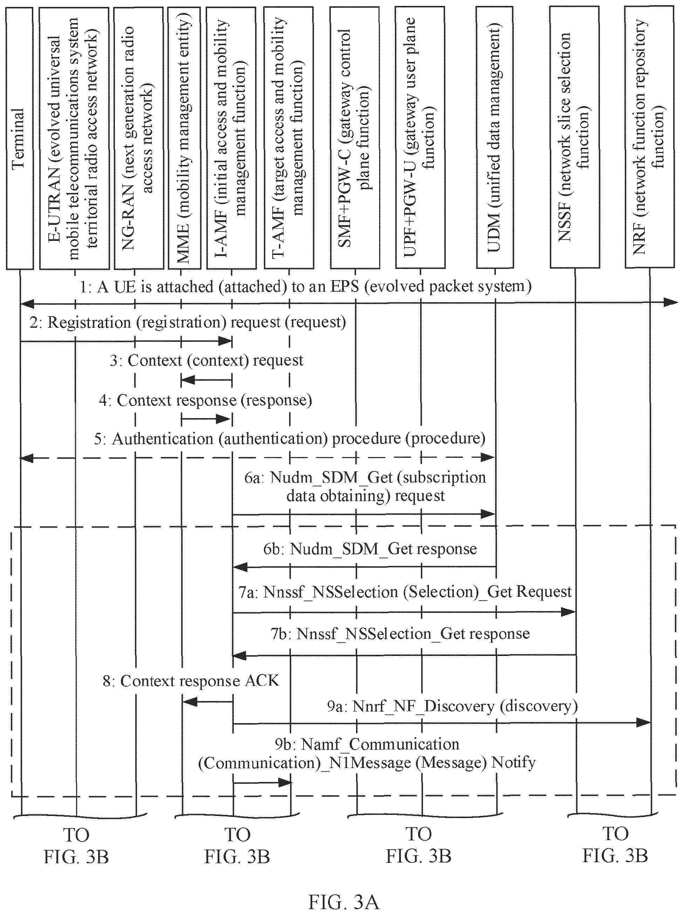

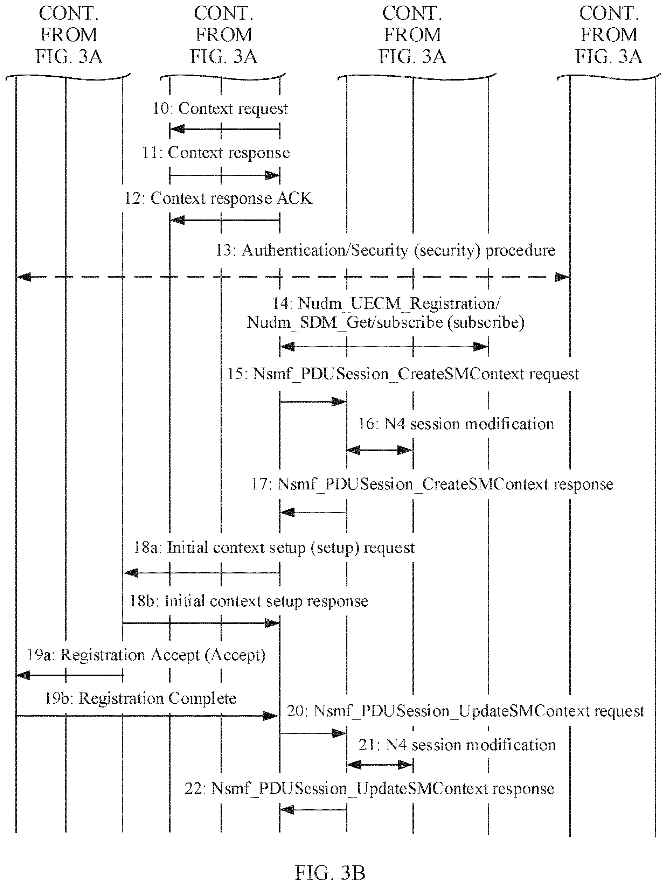

FIG. 1A and FIG. 1B show a preparation phase of an existing 4G-to-5G handover (handover, HO) procedure. FIG. 2A and FIG. 2B are an execution phase of an existing 4G-to-5G handover procedure. FIG. 3A and FIG. 3B are an existing 4G-to-5G relocation procedure. For specific implementation of steps in FIG. 1A to FIG. 3B, refer to a conventional technology.

An I-AMF is an initial access and mobility management function (initial access and mobility management function, initial AMF) network element, and a T-AMF is a target access and mobility management function (target access and mobility management function, target AMF) network element.

It can be noted that FIG. 1A, FIG. 1B, FIG. 2A, and FIG. 2B show only an intermediate session management function (session management function, SMF) network element in a scenario in which a terminal roams between different areas (for example, the terminal roams between different provinces) within a service range of a same operator. An intermediate session management function network element in a scenario in which the terminal roams between different operator networks (for example, international roaming) may be referred to as a visited V-SMF, and an intermediate user plane function (user plane function, UPF) network element in a roaming scenario may be referred to as a visited V-UPF. In a non-roaming scenario, an intermediate SMF may be referred to as an intermediate SMF (intermediate SMF, I-SMF), and an intermediate UPF may be referred to as an intermediate UPF (intermediate UPF, I-UPF).

Currently, in the 4G-to-5G handover procedure, intermediate network devices such as an I-UPF and an I-SMF may need to be reselected, which increases a latency and complexity of the 4G-to-5G handover procedure.

Likewise, the 4G-to-5G relocation procedure has the same problem.

To resolve the foregoing technical problem, embodiments of this application provide a communication method. The method is applied to an interworking scenario, and is specifically applied to a scenario in which a terminal moves from a coverage area of a second network to a coverage area of a first network. For example, the second network may be but is not limited to a 4G network, and the first network may be but is not limited to a 5G network.

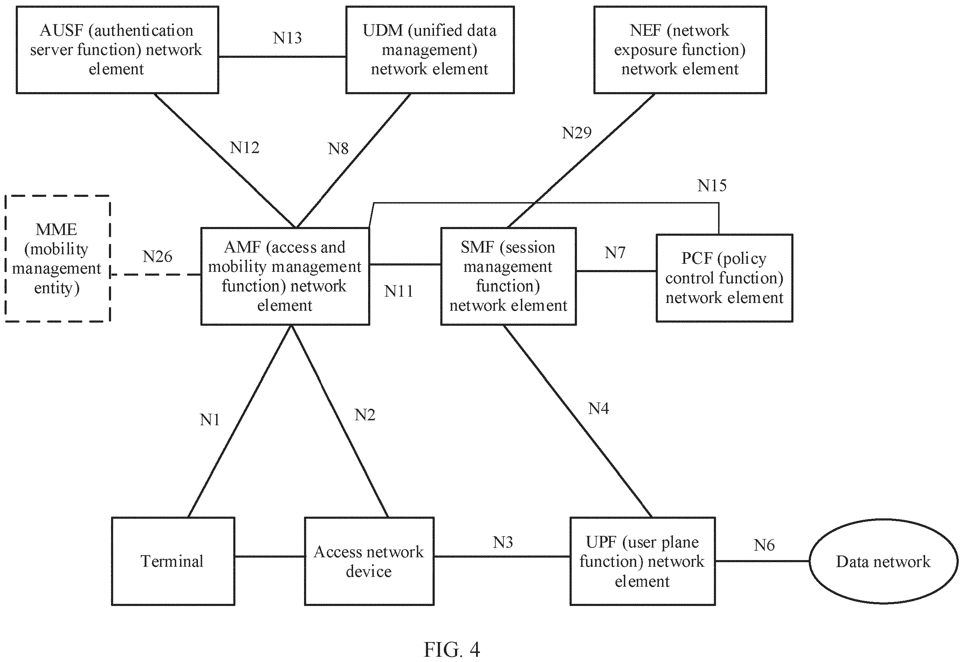

FIG. 4 is an example of a network architecture according to an embodiment of this application. As shown in FIG. 4, the network architecture in this embodiment of this application includes an existing 5GS. The 5GS includes an access and mobility management function (access and mobility management function, AMF) network element, a session management function (session management function, SMF) network element, a user plane function (user plane function, UPF) network element, a unified data management (unified data management, UDM) network element, a policy control function (policy control function, PCF) network element, an authentication server function (authentication server function, AUSF) network element, a network exposure function (network exposure function, NEF) network element, and some network elements that are not shown, for example, a network function repository function (network function repository function, NRF) network element. This is not specifically limited in this embodiment of this application.

As shown in FIG. 4, in this embodiment of this application, a terminal accesses the 5GS via an access network device, the terminal communicates with the AMF network element through a next generation (Next generation, N) 1 interface (N1 for short), the access network device communicates with the AMF network element through an N2 interface (N2 for short), the access network device communicates with the UPF network element through an N3 interface (N3 for short), the AMF network element communicates with the SMF network element through an N11 interface (N11 for short), the AMF network element communicates with the UDM network element through an N8 interface (N8 for short), the AMF network element communicates with the AUSF network element through an N12 interface (N12 for short), the AMF network element communicates with the PCF network element through an N15 interface (N15 for short), the SMF network element communicates with the PCF network element through an N7 interface (N7 for short), the SMF network element communicates with the UPF network element through an N4 interface (N4 for short), the NEF network element communicates with the SMF network element through an N29 interface (N29 for short), and the UPF network element accesses a data network (data network, DN) through an N6 interface (N6 for short). The data network may be the Internet or a network, for example, an enterprise private network, that provides a specific service.

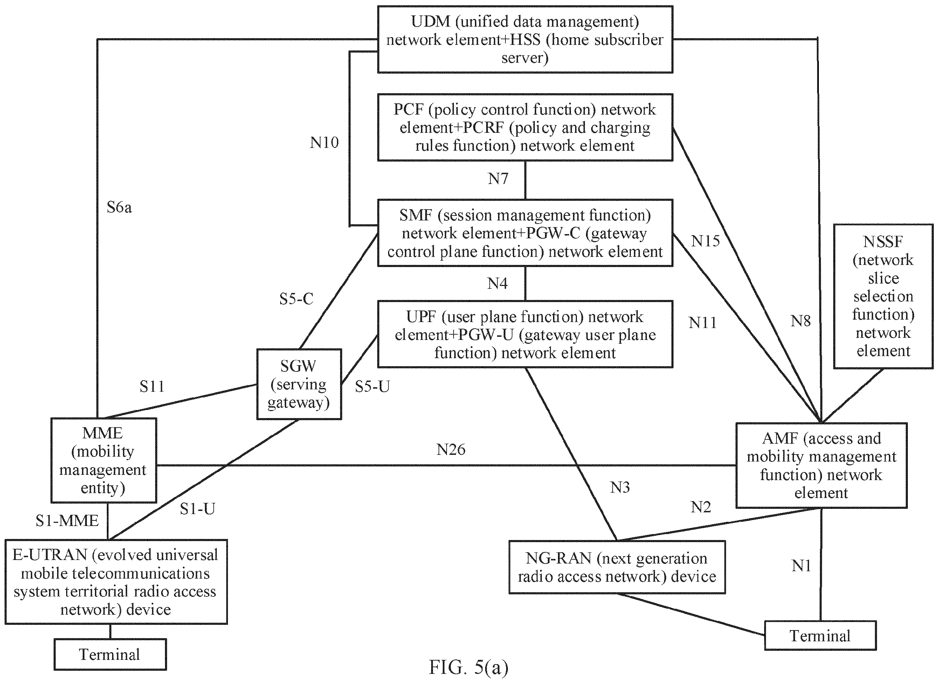

In addition, as shown in a non-roaming architecture in FIG. 5(a), to implement interworking (or referred to as interworking) between a 5GS and an EPS, a network architecture in an embodiment of this application may further include a mobility management entity (mobility management entity, MME) in the EPS. The MME communicates with an SMF network element through an N26 interface (N26 for short). Certainly, the network architecture in this embodiment of this application may further include another network element in the EPS, for example, a network element or device such as an evolved universal mobile telecommunications system (universal mobile telecommunications system, UMTS) territorial radio access network (evolved UMTS territorial radio access network, E-UTRAN) device, a packet data network (packet data network, PDN) gateway user plane function (PDN gateway user plane function, PGW-U) network element, a PDN gateway control plane function (PDN gateway control plane function, PGW-C) network element, a policy and charging rules function (policy and charging rules function, PCRF) network element, or a home subscriber server (home subscriber server, HSS). This is not specifically limited in this embodiment of this application.

In a possible implementation, some network elements in the 5GS-EPS interworking architecture may be deployed in an integrated manner. For example, FIG. 5(a) is a schematic diagram of an existing 5GS-EPS interworking architecture. The 5GS and EPS share a UPF network element+the PGW-U network element, the SMF network element+the PGW-C network element, a PCF network element+the PCRF network element, and a UDM network element+the HSS. Herein, "+" represents integrated configuration. The UPF is a user plane function network element in the 5GS, the PGW-U is a gateway user plane function network element that is in the EPS and that corresponds to the UPF, the SMF is a session management function network element in the 5GS, the PGW-C is a gateway control plane function network element that is in the EPS and that corresponds to the SMF, the PCF is a policy control function network element in the 5GS, and the PCRF is a policy and charging rules function network element that is in the EPS and that corresponds to the PCF.

In addition, as shown in FIG. 5(a), the 5GS-EPS interworking architecture may further include the MME and a serving gateway (Serving Gateway, SGW) in the EPS. Optionally, the 5GS-EPS interworking architecture may further include a network slice selection function (network slice selection function, NSSF) network element and some network elements that are not shown, for example, an NEF network element. This is not specifically limited in this embodiment of this application.

As shown in FIG. 5(a), in this embodiment of this application, a terminal accesses the EPS via the E-UTRAN device, and a terminal accesses the 5GS via a next generation radio access network (next generation radio access network, NG-RAN) device. The E-UTRAN device communicates with the MME through an S1-MME interface. The E-UTRAN device communicates with the SGW through an S1-U interface. The MME communicates with the SGW through an S11 interface. The MME communicates with the UDM network element+the HSS through an S6a interface. The MME communicates with an AMF network element through an N26 interface. The SGW communicates with the UPF network element+the PGW-U network element through an S5-U interface. The SGW communicates with the SMF network element+the PGW-C network element through an S5-C interface. The UPF network element+the PGW-U network element communicate with the NG-RAN device through an N3 interface. The UPF network element+the PGW-U network element communicate with the SMF network element+the PGW-C network element through an N4 interface. The SMF network element+the PGW-C network element communicate with the PCF network element+the PCRF network element through an N7 interface. The UDM network element+the HSS communicate with the SMF network element+the PGW-C network element through an N10 interface. The UDM network element+the HSS communicate with the AMF network element through an N8 interface. The PCF network element+the PCRF network element communicate with the AMF network element through an N15 interface. The SMF network element+the PGW-C network element communicate with the AMF network element through an N11 interface. The AMF network element communicates with the NG-RAN device through an N2 interface. The AMF network element communicates with the terminal through an N1 interface.

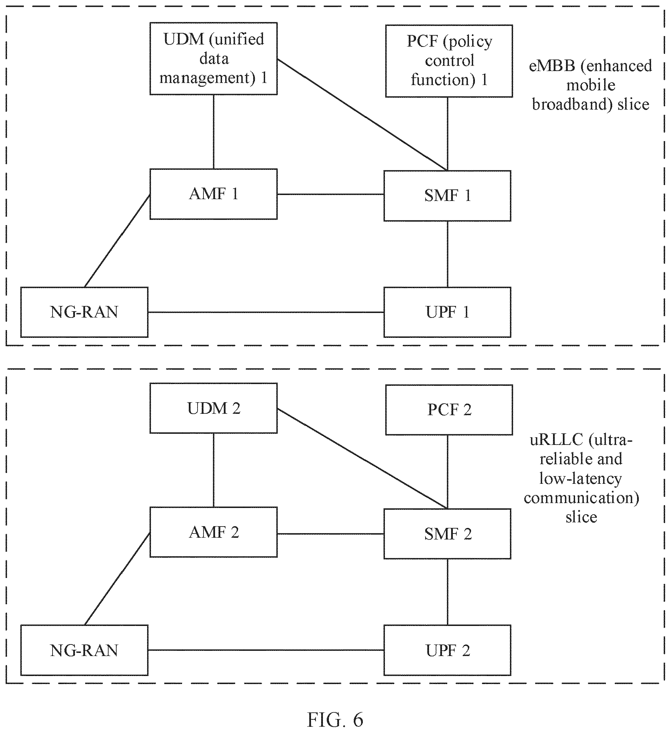

An operator may obtain a plurality of virtual networks, namely, network slices, through slicing on a hardware infrastructure. In other words, a network slice may include one or more network functions. One network function may belong to one network slice, or may belong to a plurality of network slices. A network function corresponds to a specific physical resource, and the physical resource includes but is not limited to access, connection, computing, and storage resources. The network function is, for example, a UPF, a UDM, or an AMF. In an interworking procedure, after being handed over or relocated to a 5G network, a terminal may access different network slices, and then connect to a core network through a PDU session on a corresponding network slice, to obtain a service. FIG. 6 is used as an example. An eMBB slice is constructed on an NG-RAN, a UDM 1, an AMF 1, a PCF 1, an SMF 1, and a UPF 1. A uRLLC slice is constructed on the NG-RAN, a UDM 2, an AMF 2, a PCF 2, an SMF 2, and a UPF 2.

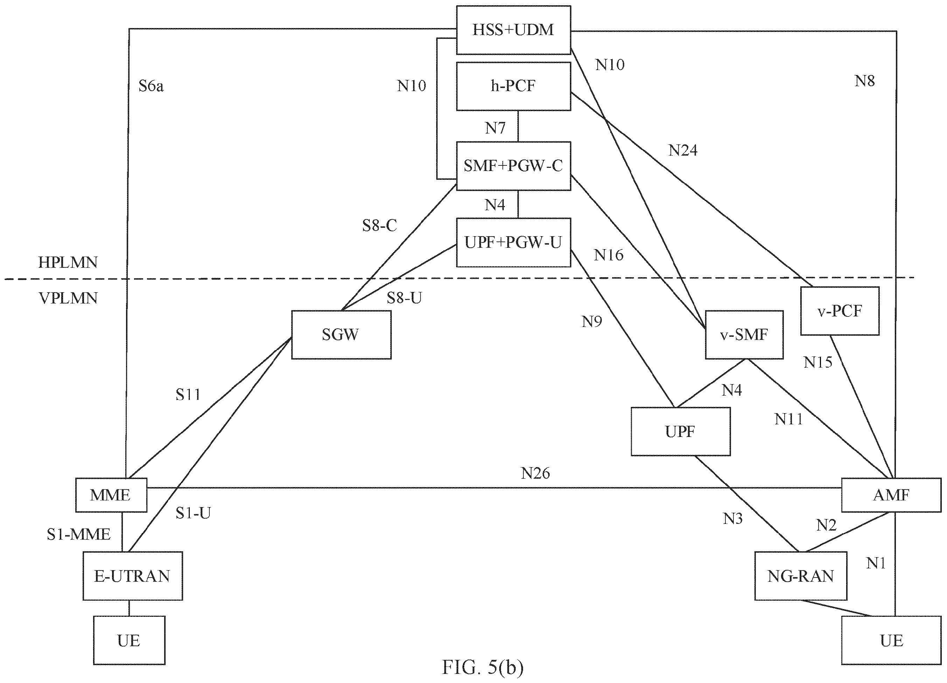

It can be noted that FIG. 5(a) is merely a schematic diagram of an existing 5GS-EPS interworking architecture. Certainly, there may be another 5GS-EPS interworking architecture such as a roaming architecture shown in FIG. 5(b). This is not specifically limited in embodiments.

It can be noted that the names of the network elements and the interfaces between the network elements in FIG. 4, FIG. 5(a), or FIG. 5(b) are merely an example. In specific implementation, there may be other names of the network elements and the interfaces between the network elements. This is not specifically limited in embodiments of this application.

The following describes technical solutions in embodiments of this application with reference to the accompanying drawings in embodiments of this application.

A network architecture and a service scenario that are described in embodiments of this application are intended to describe the technical solutions in embodiments of this application more clearly, and do not constitute a limitation to the technical solutions provided in embodiments of this application. A person of ordinary skill in the art may know that with evolution of a network architecture and emergence of a new service scenario, the technical solutions provided in embodiments of this application are also applicable to a similar technical problem.

Optionally, the terminal (terminal) in embodiments of this application may include various computing devices having a wireless communication function, a cellular phone (cellular phone), a smartphone (smartphone), a machine type communication (machine type communication, MTC) terminal, UE, a terminal device (terminal device), and the like.

Optionally, the access network device in embodiments of this application is a device that accesses the core network, for example, may be an NG-RAN device, an E-UTRAN device, a base station, or a non-3rd generation partnership project (3rd generation partnership project, 3GPP) access network device. The base station may be in various forms, such as a macro base station, a micro base station (also referred to as a small cell), a relay station, and an access point.

Optionally, the devices (the AMF, the MME, and the like) in embodiments of this application each may be implemented by one device, may be jointly implemented by a plurality of devices, or may be implemented as a functional module in one or more devices. This is not specifically limited in embodiments of this application. It may be understood that the foregoing functions may be network elements in a hardware device, may be software functions running on dedicated hardware, or may be virtualization functions instantiated on a platform (for example, a cloud platform).

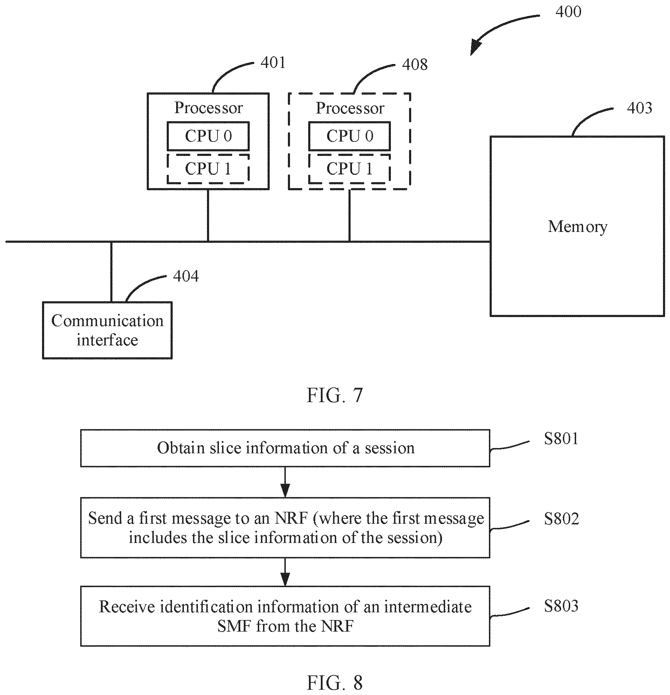

For example, the devices (the AMF, the MME, and the like) in embodiments of this application each may be implemented by using a communication device in FIG. 7. FIG. 7 is a schematic diagram of a structure of a communication device according to an embodiment of this application. The communication device 400 includes at least one processor 401, a memory 403, and at least one communication interface 404.

The processor 401 may be a general purpose central processing unit (central processing unit, CPU), a microprocessor, an application-specific integrated circuit (application-specific integrated circuit, ASIC), or one or more integrated circuits configured to control program execution of the solutions in this application.

There may be a path between the components, and the path is for transmitting information between the foregoing components.

The communication interface 404 is any apparatus such as a transceiver, is configured to communicate with another device or a communication network such as the Ethernet, a radio access network (radio access network, RAN), or a wireless local area network (wireless local area network, WLAN).

The memory 403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through a communication line. The memory may alternatively be integrated with the processor.

The memory 403 is configured to store computer-executable instructions for performing the solutions in this application, and the processor 401 controls execution of the computer-executable instructions. The processor 401 is configured to execute the computer-executable instructions stored in the memory 403, to implement communication methods provided in the following embodiments of this application.

Optionally, the computer-executable instructions in this embodiment of this application may also be referred to as application program code. This is not specifically limited in this embodiment of this application.

In specific implementation, in an embodiment, the processor 401 may include one or more CPUs such as a CPU 0 and a CPU 1 in FIG. 7.

In specific implementation, in an embodiment, the communication device 400 may include a plurality of processors such as the processor 401 and a processor 408 in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

The communication device 400 may be a general-purpose device or a special-purpose device. In specific implementation, the communication device 400 may be any device having a structure similar to that in FIG. 7. A type of the communication device 400 is not limited in this embodiment of this application.

It can be noted that names of messages between network elements, names of parameters in the messages, or the like in the following embodiments of this application are merely an example, and there may alternatively be other names in specific implementation. This is not specifically limited in embodiments of this application.

First, for example, a communication method is applied to the network architecture shown in FIG. 4, FIG. 5(a), or FIG. 5(b). As shown in FIG. 8, the communication method provided in an embodiment of this application includes the following steps.

S801: Obtain slice information of a session.

Step S801 may be performed by an I-AMF or a T-AMF. The I-AMF is an AMF initially selected for the terminal. When the I-AMF cannot provide a service for the terminal, an AMF may be re-allocated, and the I-AMF may select a T-AMF that can provide a service for the terminal. Specifically, when the I-AMF supports the slice information of the session, it indicates that the I-AMF can provide a needed slice service for the terminal, and step S801 may be performed by the I-AMF. Alternatively, when the I-AMF does not support the slice information of the session, it indicates that the I-AMF cannot provide a needed slice service for the terminal, and a T-AMF that can provide the needed slice service for the terminal needs to be re-allocated, and step S801 may be performed by the T-AMF. Alternatively, when the I-AMF does not support the slice information of the session, the I-AMF performs step S801, and the I-AMF may send the slice information of the session to the T-AMF.

Optionally, when the I-AMF does not support the slice information of the session, an AMF re-allocation (Re-allocation) procedure further needs to be performed. Specifically, the I-AMF sends a second message to the NRF, where the second message is for querying for identification information of the T-AMF. Then, the I-AMF receives the identification information of the T-AMF from the NRF. Optionally, the I-AMF sends a user context to the T-AMF.

The slice information identifies a network slice. For example, the slice information may be single network slice selection assistance information (single network slice selection assistance information, S-NSSAI). Slice information of a PDU session of the terminal may be, for example, in-used S-NSSAI allocated by an anchor session management function (anchor SMF, A-SMF) network element to the terminal or other slice information.

In this embodiment of this application, the A-SMF may be the SMF+the PGW-C shown in FIG. 5(a) or FIG. 5(b). Optionally, the A-SMF allocates, to the terminal, an IP address for accessing the data network (for example, the Internet). An anchor means that the A-SMF does not change in a moving process of the terminal. Once the A-SMF changes, the IP address allocated by the A-SMF to the terminal becomes invalid, and a service of the terminal is interrupted.

In this embodiment of this application, an anchor user plane function (anchor UPF, A-UPF) network element may be the UPF+the PGW-U shown in FIG. 5(a) or FIG. 5(b). In the moving process of the terminal, the A-UPF remains unchanged. The A-UPF may forward data between the terminal and the data network.

In a possible implementation, obtaining the slice information may be implemented as: receiving the slice information from the A-SMF. Optionally, an AMF receives a session context from the A-SMF, where the session context includes the slice information.

It can be noted that the terminal may have a plurality of PDU sessions, the plurality of PDU sessions may correspond to a plurality of A-SMFs, and slice information of the terminal includes slice information from the plurality ofA-SMFs.

Alternatively, obtaining the slice information may be implemented as: receiving the slice information from the MME. Optionally, an AMF receives a user context from the MME, where the user context includes the slice information.

S802: Send a first message to the NRF.

When the I-AMF supports the slice information of the session, step S802 may be performed by the I-AMF. When the I-AMF does not support the slice information of the session, step S802 may be performed by the T-AMF.

The first message includes the slice information of the session, the first message requests identification information of an intermediate session management function (I-SMF or V-SMF) network element, the intermediate session management function network element is configured to manage an intermediate user plane function network element, and the intermediate user plane function network element is configured to forward service data between the access network device to which the terminal is connected and the anchor user plane function network element when the terminal moves out of a service area of the anchor user plane function network element. In this way, service continuity can be ensured based on a forwarding function of the intermediate user plane function network element.

The identification information of the intermediate session management function network element is, for example, but not limited to, an IP address.

In a possible implementation, the first message may be a discovery request (Nnrf_NF_Discovery), and the discovery request includes the slice information. After receiving the discovery request, the NRF may search, based on the slice information, for an intermediate network device, for example, the I-SMF, that supports a corresponding slice, and send information about the intermediate network device to the AMF, so that the AMF can learn of the information about the intermediate network device. For example, when AMF re-allocation is not needed, the I-AMF performs step S801, and the I-AMF may obtain the slice information of the session from the A-SMF or the MME, and send the first message to the NRF, where the first message carries the slice information of the session, to query for the identification information of the I-SMF or the V-SMF that supports the slice information of the session. For another example, when AMF re-allocation is performed, the T-AMF performs step S801, and the T-AMF may obtain the slice information of the session from the I-AMF, the A-SMF, or the MME, and send the first message to the NRF, where the first message carries the slice information of the session, to query for the identification information of the I-SMF or the V-SMF.

S803: Receive the identification information of the intermediate SMF from the NRF.

When the I-AMF supports the slice information of the session, step S803 may be performed by the I-AMF. When the I-AMF does not support the slice information of the session, step S803 may be performed by the T-AMF.

It may be understood that, after requesting the identification information of the intermediate SMF from the NRF, the I-AMF or the T-AMF receives the identification information of the intermediate SMF from the NRF.

According to the communication method provided in this embodiment of this application, in a scenario in which the terminal moves from a coverage area of a second network to a coverage area of a first network, the slice information of the session can be obtained, and a network function repository function network element is queried for the identification information of the intermediate session management function network element based on the slice information of the session. The intermediate session management function network element usually can support a network slice service needed by the terminal. In this way, subsequently, the needed network slice service can be provided for the terminal by using the intermediate session management function network element, a terminal service failure probability can be reduced, and service quality can be improved. In addition, the intermediate session management function network element that supports a terminal service can be directly queried for based on the slice information of the session, and there is usually no need to re-allocate an intermediate session management function network element, so that signaling overheads for re-allocation of the intermediate session management function network element are avoided.

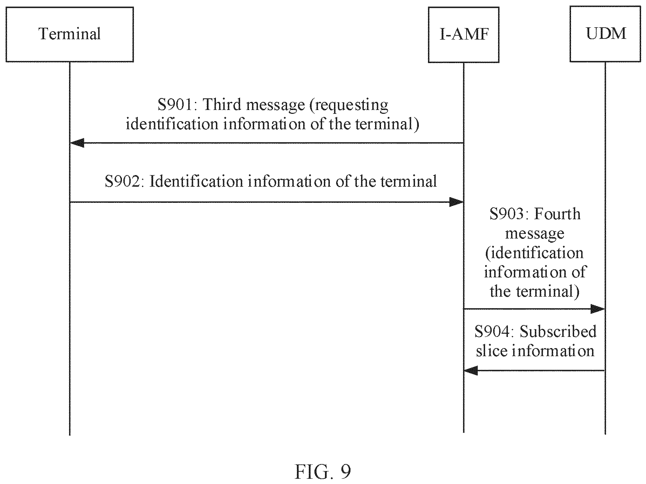

An embodiment of this application further provides a communication method. Refer to FIG. 9. The method includes the following steps.

S901: An I-AMF sends a third message to a terminal.

Accordingly, the terminal receives the third message from the I-AMF.

The third message requests identification information of the terminal. An identifier of the terminal is, for example, but not limited to, a subscription concealed identifier (subscription concealed identifier, SUCI) or a subscription permanent identifier (subscription permanent identifier, SUP1).

The third message may be an identity request (Identity Request) message. In a possible implementation, the I-AMF receives a registration request (Registration Request), where the registration request includes a terminal status (UE Status) information element. The I-AMF determines, based on the terminal status information element, that the terminal is performing a 4G-to-5G mobility registration procedure. Then, the I-AMF sends the third message to the terminal.

S902: The terminal sends the identification information of the terminal to the I-AMF.

Accordingly, the I-AMF receives the identification information of the terminal from the terminal.

In a possible implementation, the terminal sends an identity response (Identity Response) to the I-AMF, where the identity response includes the identification information of the terminal.

S903: The I-AMF sends a fourth message to a UDM.

The fourth message includes identification information of the terminal.

Optionally, the fourth message may be a subscription data obtaining message (Nudm_SDM_Get).

S904: The UDM sends subscribed slice information of the terminal to the I-AMF.

Accordingly, the I-AMF receives the subscribed slice information of the terminal from the UDM.

The subscribed information may be, for example, subscribed S-NSSAI.

In a possible implementation, the identification information of the terminal may be unencrypted identification information. That is, in step S902, the terminal sends the unencrypted identification information to the I-AMF. In this case, the I-AMF may obtain the subscribed slice information from the UDM by using the unencrypted identification information of the terminal directly.

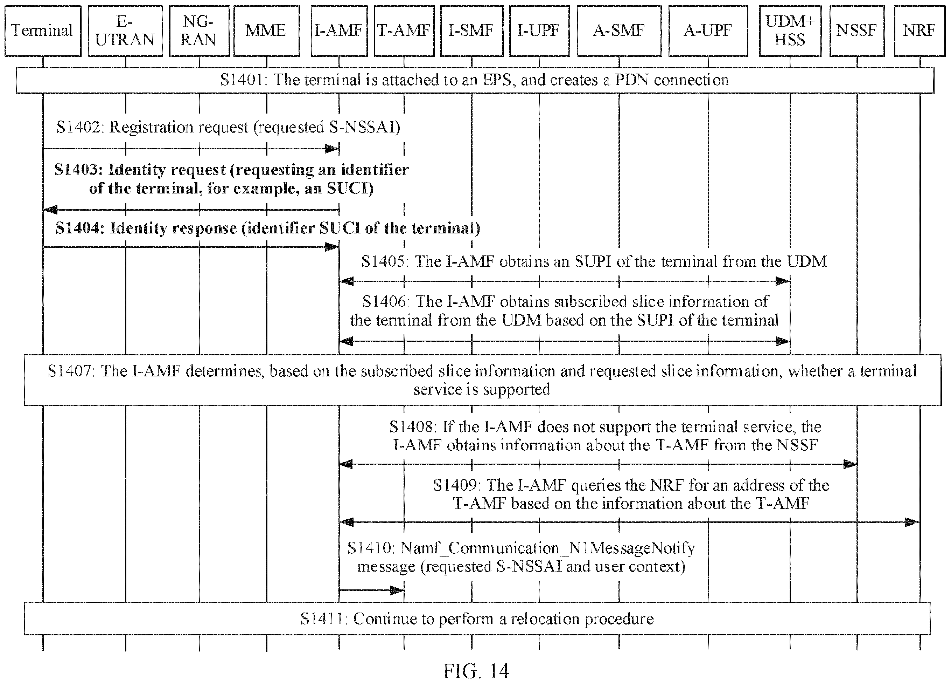

Alternatively, the identification information received by the I-AMF from the terminal is encrypted identification information. In this case, the I-AMF needs to interact with the UDM to perform an authentication procedure. In the authentication process, the UDM sends decrypted identification information to the I-AMF. For specific implementation of the method, refer to an embodiment corresponding to FIG. 14.

According to the communication method provided in this embodiment of this application, the I-AMF can obtain the identification information of the terminal from the terminal, and obtain the subscribed slice information from the UDM by using the identification information. In a conventional technology, the I-AMF obtains the identification information of the terminal by receiving a context from an MME. In comparison, in this embodiment of this application, the I-AMF can obtain the identification information of the terminal from the terminal without depending on the MME in a live network, so that dependency on the live network is reduced, and an implementation is more flexible.

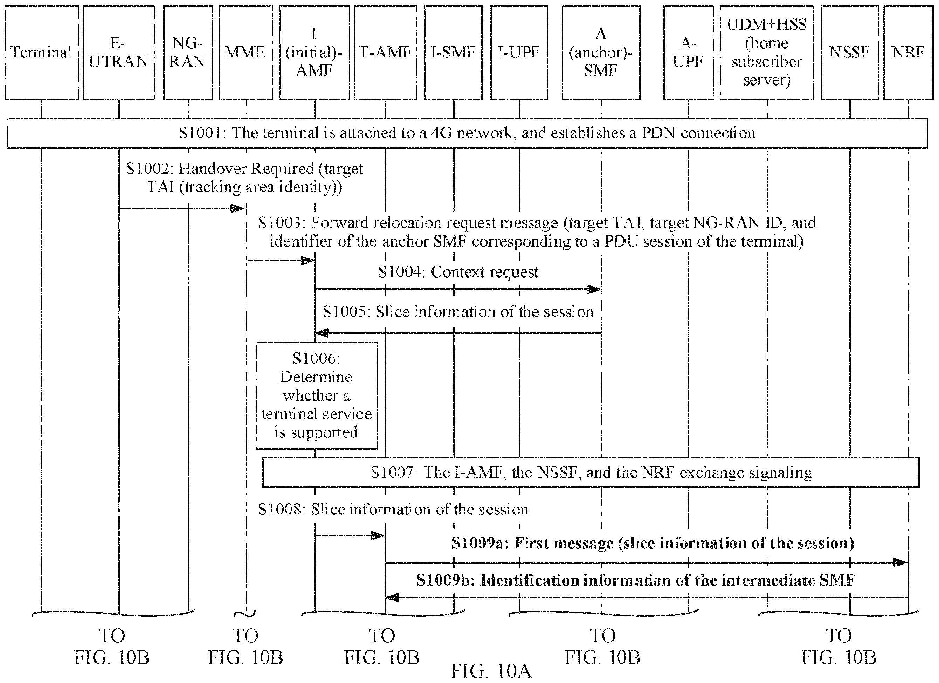

The following describes the solutions in embodiments of this application with reference to specific application scenarios in FIG. 10A to FIG. 14.

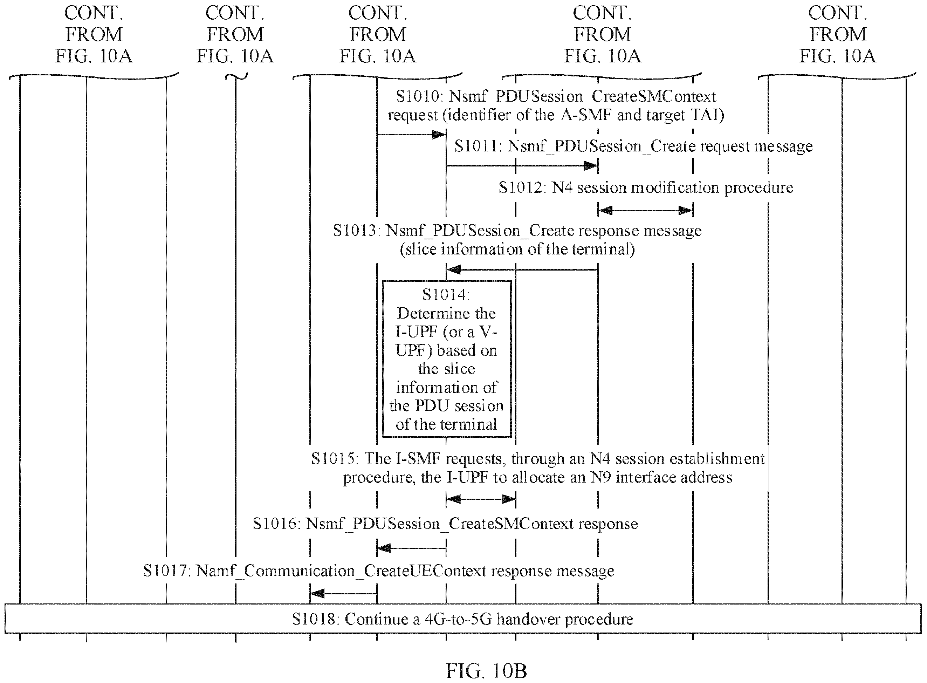

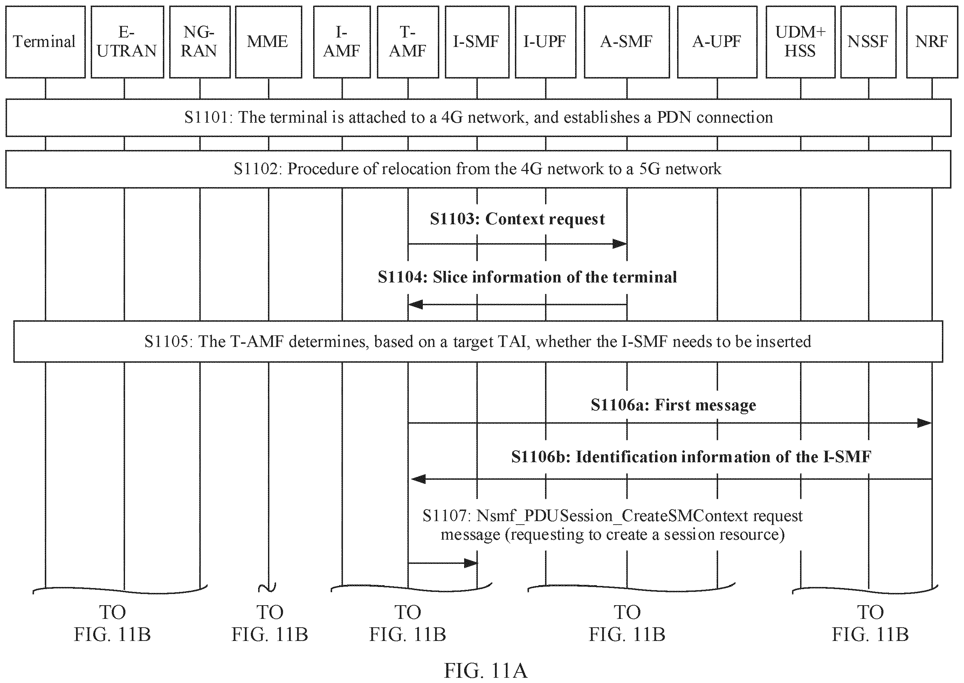

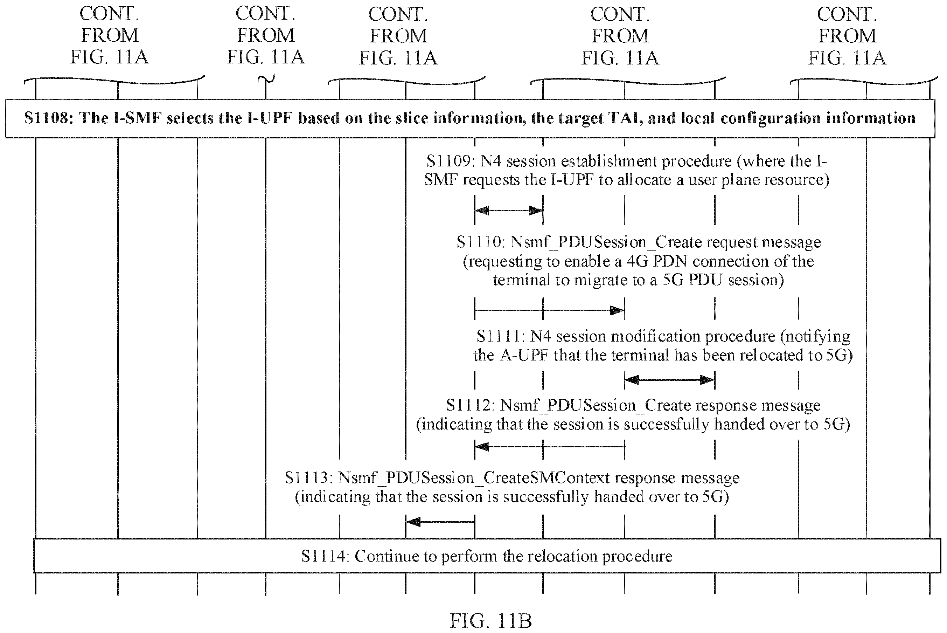

An embodiment corresponding to FIG. 10A and FIG. 10B is applied to a case in which a terminal is handed over from a 4G network to a 5G network and an AMF obtains slice information of a PDU session of the terminal from an SMF. An embodiment corresponding to FIG. 11A and FIG. 11B is applied to a case in which a terminal is relocated from a 4G network to a 5G network and an AMF obtains slice information of a PDU session of the terminal from an SMF.

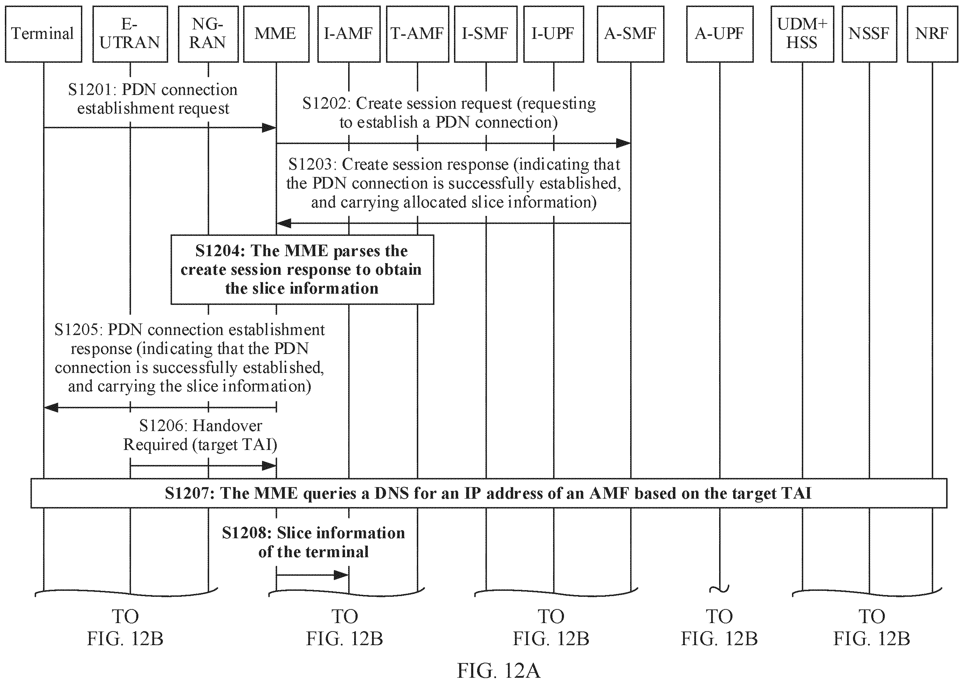

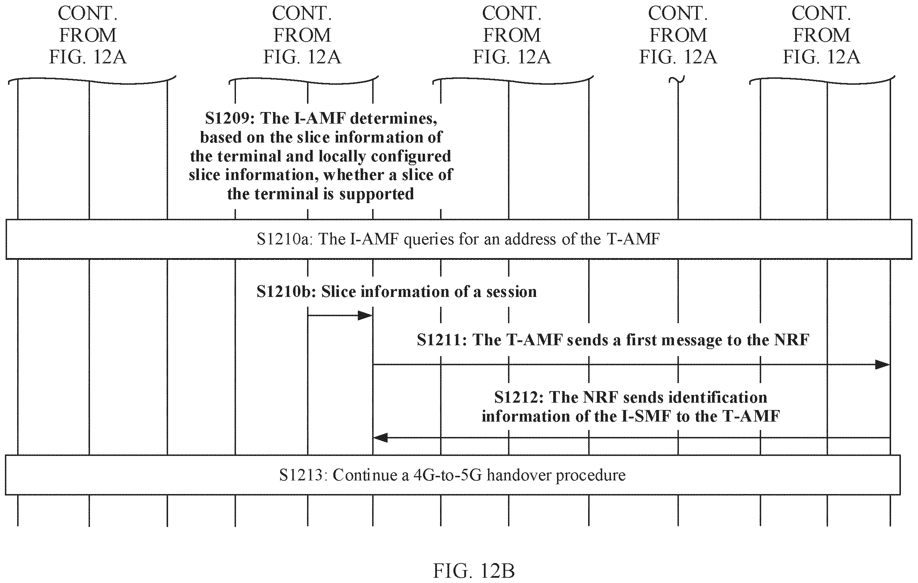

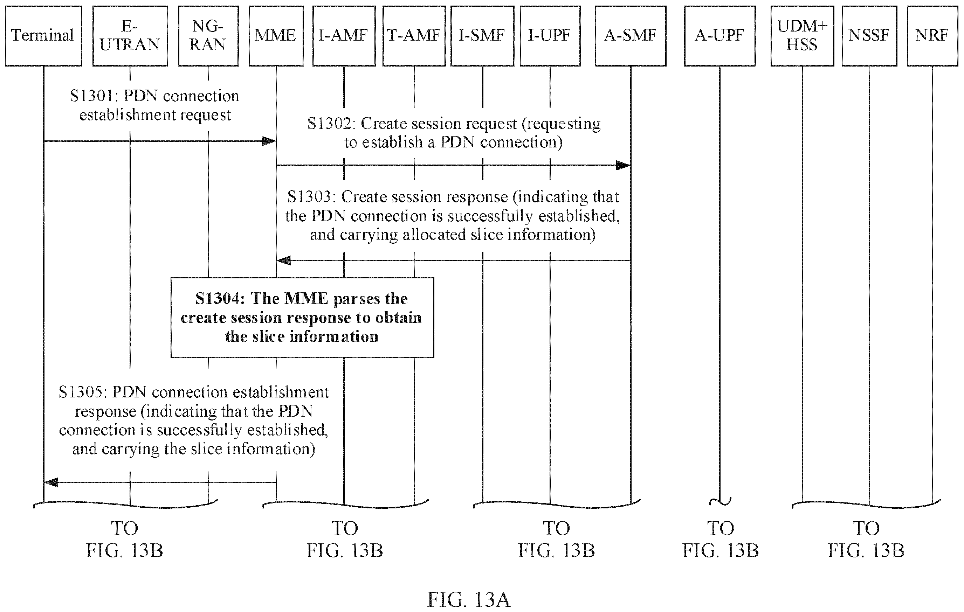

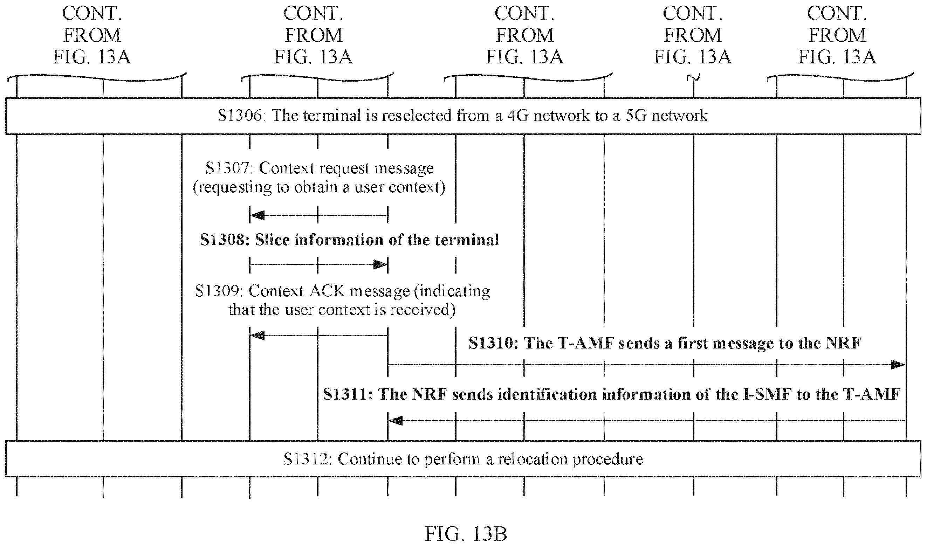

An embodiment corresponding to FIG. 12A and FIG. 12B is applied to a case in which a terminal is handed over from a 4G network to a 5G network and an AMF obtains slice information of a PDU session of the terminal from an MME. An embodiment corresponding to FIG. 13A and FIG. 13B is applied to a case in which a terminal is relocated from a 4G network to a 5G network and an AMF obtains slice information of a PDU session of the terminal from an MME.

An embodiment corresponding to FIG. 14 is applied to a case in which a terminal is relocated from a 4G network to a 5G network and an AMF obtains slice information of a PDU session of the terminal from a UDM.

For example, the terminal is handed over from the 4G network to the 5G network, and the AMF obtains the slice information of the PDU session of the terminal from the SMF. Refer to FIG. 10A and FIG. 10B. A communication method provided in this embodiment of this application includes the following steps.

S1001: The terminal is attached to the 4G network, and establishes a PDN connection (PDN connection).

It can be noted that, in embodiments of this application, text or an accompanying drawing of some solutions different from a conventional technology is shown in bold. This is uniformly described herein.

In a PDN connection establishment procedure, an A-SMF allocates the slice information such as S-NSSAI to the terminal, and sends the S-NSSAI to the terminal by using a PDN connection establishment response message. In a system that supports interworking between 4G and 5G, to ensure that the 4G PDN connection can migrate to a 5G PDU session or the 5G PDU session can migrate to the 4G PDN connection, there is usually a mapping relationship between the PDN connection and the PDU session (PDU Session). The slice information allocated by the A-SMF to the terminal is slice information corresponding to the PDU session after the 4G PDN connection is mapped to the 5G PDU session.

S1002: An E-UTRAN device sends Handover Required (Handover Required) to an MME.

The terminal moves, and the E-UTRAN device initiates a procedure of handover to the 5G network based on a measurement report of the terminal or the like. Optionally, Handover Required carries a target tracking area identity (target tracking area identity, target TAI) and a target NG-RAN ID. The target TAI is a 5G TAI to which handover is performed. The target NG-RAN ID is an identifier of an NG-RAN device to which the terminal is handed over.

S1003: The MME sends a forward relocation request (Forward Relocation Request) message to an initial AMF (Initial AMF, I-AMF). The AMF obtains a user context through this step.

It can be understood that the MME queries a domain name server (DNS, Domain Name Server) for information about a target AMF based on the target TAI. Assuming that the DNS returns an address of the I-AMF to the MME, the MME sends the forward relocation request message to the I-AMF, where the message includes the user context. Optionally, the user context includes information such as the target TAI, the target NG-RAN ID, and an identifier of the A-SMF corresponding to the PDU session of the terminal.

S1004: The I-AMF sends a context request to the A-SMF.

The I-AMF queries an NRF for an internet protocol (internet protocol, IP) address of the A-SMF based on the identifier, for example, a PGW node name, of the A-SMF obtained from the MME, and the NRF feeds back the IP address of the A-SMF to the I-AMF. Optionally, the NRF further feeds back, to the I-AMF, information such as slice information (for example, S-NSSAI) supported by the A-SMF and a TAI that the A-SMF can serve.

In a possible implementation, the I-AMF invokes a session context request (Nsmf_PDUSession_Context Request) service of the A-SMF to send the context request to the A-SMF, where the context request requests the slice information of the session.

It can be noted that the terminal may have one or more PDU sessions, each PDU session corresponds to one piece of slice information, and a slice corresponding to the piece of slice information is established on one A-SMF. That is, the PDU session corresponds to the A-SMF. The I-AMF needs to obtain slice information of the plurality of PDU sessions from A-SMFs corresponding to all sessions of the terminal.

S1005: The A-SMF feeds back the slice information of the session to the I-AMF.

The A-SMF allocates corresponding 5G slice information to the PDN connection in the PDN connection create process in step S1001. In a possible implementation, in a 4G-to-5G handover procedure, the A-SMF sends a session context response (Nsmf_PDUSession_Context Response) message to the I-AMF, where the message includes a session context, and the session context includes the slice information of the PDU session of the terminal. Specifically, the session context includes the slice information of the PDU session that corresponds to the A-SMF and that is in the one or more PDU sessions of the terminal.

After receiving the forward relocation request from the MME, an I-AMF can obtain the slice information of the session from the A-SMF, so that an intermediate SMF is subsequently queried for based on the slice information of the session, and the found intermediate SMF usually can support a slice service needed by the terminal. This is different from the conventional technology.

S1006: The I-AMF determines whether a terminal service is supported.

Specifically, the I-AMF performs determining based on locally configured slice information and the slice information of the PDU session of the terminal. If the I-AMF does not support a slice of the terminal, the I-AMF does not support the terminal service. If the I-AMF supports a slice of the terminal, the I-AMF supports the terminal service.

It can be understood that, if the I-AMF does not support the terminal service, step S1007 is performed, and AMF relocation is needed, so that a relocated AMF provides a service for the terminal. If the I-AMF supports the terminal service, the I-AMF is a T-AMF, and can provide a service for the terminal, and step S1007 does not need to be performed. That is, AMF relocation is not needed.

For example, the slice information S-NSSAI of the PDU session of the terminal indicates that the terminal needs an eMBB-type slice, and S-NSSAI locally configured on the I-AMF includes the eMBB-type slice. In this case, it is considered that the I-AMF supports the terminal service.

S1007: The I-AMF, an NSSF, and the NRF exchange signaling.

The I-AMF interacts with the NSSF and the NRF, so that the I-AMF queries for an address of the target AMF (target AMF, T-AMF). In this way, the T-AMF can be relocated subsequently, and the T-AMF provides a network slice service for the terminal.

S1008: The I-AMF sends the slice information of the session to the T-AMF.

In a possible implementation, the I-AMF sends an Namf_Communication_CreateUEContext request message to the T-AMF. This message carries the user context, so that the I-AMF transfers some information about the terminal to the T-AMF. The user context includes the slice information of the session.

Optionally, the user context includes the information such as the target TAI, the target NG-RAN ID, and the identifier of the A-SMF.

S1009a: The T-AMF sends a first message to the NRF.

The first message may be, for example, a network function discovery (Nnrf_NF_Discovery) request message, and the request message carries the target TAI and the slice information of the session. Optionally, the first message requests identification information of the intermediate SMF.

It can be understood that the T-AMF determines, based on the target TAI obtained from the I-AMF, whether the I-SMF (a V-SMF in an international roaming scenario) is needed, so that the I-SMF provides a service for the terminal. Specifically, if the target TAI is a TAI that the A-SMF can serve, the I-SMF is not needed. Otherwise, the I-SMF is needed to provide a service for the terminal. In this case, the T-AMF sends the first message to the NRF, to obtain an address of the I-SMF or the V-SMF from the NRF.

S1009b: The NRF sends the identification information of the intermediate SMF to the T-AMF.

S1010: The T-AMF sends an Nsmf_PDUSession_CreateSMContext request message to the I-SMF.

It can be understood that the T-AMF sends the message to the I-SMF after obtaining the address of the I-SMF from the NRF, to request to create a session resource. Optionally, the message carries the identifier of the A-SMF.

S1011: The I-SMF sends an Nsmf_PDUSession_Create message to the A-SMF. This message requests the A-SMF to handover the PDN connection of the terminal to 5G. That is, the PDN connection in the 4G network migrates to the PDU session in the 5G network.

Specifically, the I-SMF sends a session create request (Nsmf_PDUSession_Create request) message to the A-SMF based on the identifier of the A-SMF received from the T-AMF.

S1012: N4 session modification (N4 Session Modification) procedure.

The A-SMF exchanges signaling with an A-UPF (which may be the UPF+the PGW-U shown in FIG. 5(a) or FIG. 5(b)) through the N4 session modification procedure. In this way, the A-SMF can obtain N9 interface address information of the A-UPF.

S1013: The A-SMF feeds back an Nsmf_PDUSession_Create response message to the I-SMF.

The message carries the slice information of the PDU session of the terminal (the slice information of the PDU session established on the A-SMF).

S1014: The I-SMF determines an I-UPF (or a V-UPF) based on the slice information of the PDU session of the terminal.

The I-SMF selects an I-UPF (a V-UPF in a roaming scenario) based on the slice information of the PDU session of the terminal and the target TAI obtained from the T-AMF.

S1015: The I-SMF requests, through an N4 session establishment procedure, the I-UPF to allocate an N9 interface address.

S1016: The I-SMF returns a create session management context response (Nsmf_PDUSession_CreateSMContext Response) to the T-AMF.

S1017: The T-AMF replies to the I-AMF with an Namf_Communication_CreateUEContext response message. This message indicates that an AMF relocation procedure is successful.

S1018: Continue the 4G-to-5G handover procedure.

For specific implementation of the procedure, refer to step 9 to step 15 in FIG. 1B and step 1 to step 13 in FIG. 2A and FIG. 2B.

It can be noted that, in the embodiment corresponding to FIG. 10A and FIG. 10B, relocation to the T-AMF is used as an example to describe the solutions in embodiments of this application. In a scenario in which an AMF does not need to be relocated or in another scenario, the foregoing steps S 1007, S1008, and the like are optional steps, and may not be performed. In addition, in the embodiment corresponding to FIG. 10A and FIG. 10B, that the intermediate SMF is the I-SMF and the intermediate UPF is the I-UPF is used as an example. In a roaming scenario, the intermediate SMF in this embodiment of this application may alternatively be a V-SMF, and the intermediate UPF may alternatively be a V-UPF.

For example, the terminal is relocated from the 4G network to the 5G network, and the AMF obtains the slice information of the PDU session of the terminal from the SMF. Refer to FIG. 11A and FIG. 11B. A communication method provided in this embodiment of this application includes the following steps.

S1101: The terminal is attached to the 4G network, and establishes a PDN connection.

S1102: Procedure of relocation from the 4G network to the 5G network.

Refer to step 2 to step 14 in FIG. 3A and FIG. 3B.

S1103: A T-AMF sends a context request to an A-SMF.

The context request requests a session context of the terminal.

In a possible implementation, the T-AMF invokes an Nsmf_PDUSession context request service of the A-SMF to send a context request to the A-SMF.

S1104: The A-SMF sends the slice information of the PDU session of the terminal to the T-AMF.

Specifically, the A-SMF returns the session context of the terminal to the T-AMF. The session context includes the slice information of the PDU session of the terminal. Specifically, the session context includes slice information of a PDU session that corresponds to the A-SMF and that is in one or more PDU sessions of the terminal.

S1105: The T-AMF determines, based on a target TAI, whether an I-SMF needs to be inserted.

For a determining manner, refer to the foregoing embodiment.

S1106a: The T-AMF sends a first message to an NRF.

It can be understood that, if the T-AMF determines that the I-SMF that provides a service for the terminal needs to be inserted, the T-AMF sends the first message to the NRF, where the first message carries the slice information of the session and the target TAI, to query the NRF for an I-SMF that satisfies a condition.

S1106b: The NRF sends identification information of the I-SMF to the T-AMF.

Specifically, the NRF queries, based on the slice information and the target TAI, for an I-SMF that can serve a corresponding TA and that supports a corresponding slice, and feeds back an address of the I-SMF to the T-AMF.

S1107: The T-AMF sends an Nsmf_PDUSession_CreateSMContext request message to the I-SMF.

This message requests the I-SMF to create a session resource.

S1108: The I-SMF selects an I-UPF based on the slice information, the target TAI, and local configuration information.

The I-SMF selects an I-UPF that can serve a corresponding TA and that supports a corresponding slice.

S1109: N4 session establishment procedure.

In this procedure, the I-SMF requests the I-UPF to allocate a user plane resource.

S1110: The I-SMF sends an Nsmf_PDUSession_Create request message to the A-SMF.

The I-SMF notifies, by using this message, the A-SMF to enable the 4G PDN connection of the terminal to migrate to a 5G PDU session.

S1111: N4 session modification procedure.

In this procedure, the A-SMF exchanges signaling with an A-UPF, and the A-SMF may notify the A-UPF that the terminal has been relocated to the 5G network.

S1112: The A-SMF replies to the I-SMF with an Nsmf_PDUSession_Create response message.

This message indicates that the session is successfully handed over to 5G.

S1113: The I-SMF replies to the T-AMF with an Nsmf_PDUSession_CreateSMContext response message.

This message indicates that the session is successfully handed over to 5G.

S1114: Continue to perform the relocation procedure.

Same as step 18 to step 22 in FIG. 3B. Details are not described again.

In the 4G-to-5G handover or relocation process, the PDN connection established by the terminal in 4G can migrate to the 5G PDU session, so that the terminal establishes a connection to a 5G core network device by using the PDU session. In addition, in the embodiments corresponding to FIG. 10A, FIG. 10B, FIG. 11A, and FIG. 11B, the AMF can obtain the slice information of the PDU session of the terminal from the A-SMF, thereby selecting intermediate network devices, for example, the I-SMF and the I-UPF, that support a slice needed by the PDU session. This avoids SMF and UPF re-allocation, thereby simplifying an interworking signaling procedure.

For example, the terminal is handed over from the 4G network to the 5G network, and the AMF obtains the slice information of the PDU session of the terminal from the MME. Refer to FIG. 12A and FIG. 12B. A communication method provided in this embodiment of this application includes the following steps.

S1201: The terminal sends a PDN connection establishment request (PDN Connection Establishment request) to the MME.

It can be understood that the terminal is attached to the 4G network, and initiates the PDN connection establishment request to the MME, and the terminal may perform a corresponding service by using the established PDN connection.

S1202: The MME sends a create session request (Create Session Request) message to an A-SMF.

This message requests establishment of the PDN connection.

S1203: The A-SMF feeds back a create session response (Create Session Response) to the MME.

In a possible implementation, the A-SMF allocates a network slice to the PDN connection of the terminal, and feeds back a create session response message to the MME, where the message indicates that the PDN connection is successfully established. The create session response carries information about the allocated slice.

S1204: The MME parses the create session response to obtain the slice information.

In a possible implementation, the create session response includes a protocol configuration options (protocol configuration options, PCO) information element, and the PCO information element includes the slice information. The MME parses the PCO in the create session response to obtain the slice information.

Optionally, the MME stores the slice information.

In a conventional technology, the MME does not parse the PCO in the create session response, and therefore cannot obtain the slice information. In comparison, in the communication method in this embodiment of this application, the MME performs parsing, and obtain the slice information associated with the terminal, to query, based on the slice information, for an AMF that provides a service for the terminal, and/or send the slice information to the AMF, to reduce a latency caused by network element relocation and reduce signaling overheads.

S1205: The MME sends a PDN connection establishment response (PDN Connection Establishment Response) to the terminal.

The PDN connection establishment response indicates that the PDN connection is successfully established. Optionally, the PDN connection establishment response carries the slice information.

S1206: An E-UTRAN device sends Handover Required (Handover Required) to the MME.

It is easy to understand that the terminal moves from a coverage area in the 4G network to a coverage area in the 5G network, the terminal may be in connected (CONNECTED) mode and have a service with a network, and the E-UTRAN device triggers a 4G-to-5G handover procedure of the terminal based on a measurement report of the terminal and the like.

Optionally, the Handover Required message carries a target TAI, namely, a 5G TAI to which handover needs to be performed.

S1207: The MME queries a DNS for an IP address of the AMF based on the target TAI.

It is assumed that the DNS returns an IP address of an I-AMF to the MME.

In some other embodiments, a correspondence between a TAI, a slice, and an AMF may be configured on the DNS. The corresponding AMF may be queried for based on the TAI and slice information. Accordingly, step S1207 may alternatively be implemented as follows: The MME queries the DNS for an IP address of a target AMF based on the target TAI and the slice information. Specifically, the MME sends the target TAI and the slice information of the PDU session of the terminal to the DNS. In this way, the DNS can select, based on the target TAI and the slice information, an AMF that can serve a corresponding TA and that supports a needed slice service, and feed back an address of the AMF to the MME. In this way, it can be ensured that the selected AMF supports the slice information of the PDU session of the terminal, to reduce a probability that AMF relocation is needed, reduce signaling overheads, and reduce a latency of an interworking procedure.

S1208: The MME sends the slice information of the PDU session of the terminal to the I-AMF.

The slice information is used by the I-AMF to select an intermediate SMF.

In a possible implementation, the MME sends a forward relocation request message to the I-AMF, where the message carries a user context of the terminal, and the user context includes the slice information of the PDU session of the terminal.

S1209: The I-AMF determines, based on the slice information of the PDU session of the terminal and locally configured slice information, whether a terminal service is supported.

(Optional) S1210a: The I-AMF queries for the address of the T-AMF.

It can be understood that the I-AMF, an NSSF, and an NRF exchange signaling when the I-AMF does not support a slice needed by the terminal, so that the I-AMF obtains the address of the T-AMF.

S1210b: The I-AMF sends the slice information of the session to the T-AMF.

In a possible implementation, the I-AMF sends the user context to the T-AMF, and the user context includes the slice information of the session.

S1211: The T-AMF sends a first message to the NRF.

S1212: The NRF sends identification information of the I-SMF to the T-AMF.

For specific implementation of steps S1211 and S1212, refer to the foregoing steps S1009a and S1009b.

S1213: Continue the 4G-to-5G handover procedure.

Refer to steps S1010 to S1018 in FIG. 10B.

For example, the terminal is relocated from the 4G network to the 5G network, and the AMF obtains the slice information of the PDU session of the terminal from the MME. Refer to FIG. 13A and FIG. 13B. A communication method provided in this embodiment of this application includes the following steps.

For S1301 to S1305, refer to the foregoing steps S1201 to S1205.

S1306: The terminal is relocated from the 4G network to the 5G network.

Refer to step 2 to step 9b in FIG. 3A.

S1307: A T-AMF sends a context request message to the MME.

This message requests to obtain a user context.

S1308: The MME sends the slice information of the PDU session of the terminal to the T-AMF.

In a possible implementation, the MME returns a context response message to the T-AMF, where the message carries the user context, and the user context includes the slice information of the PDU session of the terminal.

S1309: The T-AMF replies to the MME with a context ACK message.

This message indicates that the user context is received.

S1310: The T-AMF sends a first message to an NRF.

S1311: The NRF sends identification information of an I-SMF to the T-AMF.

S1312: Continue to perform a relocation procedure.

Refer to steps S1107 to S1114 in FIG. 11A and FIG. 11B. Details are not described again.

In the embodiments corresponding to FIG. 12A, FIG. 12B, FIG. 13A, and FIG. 13B, the MME obtains the slice information of the PDU session from the response message sent by the A-SMF to the terminal, and transfers the slice information to the AMF. In this way, it can be ensured that the AMF queries for the I-SMF by using correct slice information, thereby avoiding SMF re-allocation. Similarly, UPF re-allocation and the like can be avoided, and an interworking signaling procedure is simplified.

For example, the terminal is relocated from the 4G network to the 5G network, and the AMF obtains the slice information of the PDU session of the terminal from the UDM. Refer to FIG. 14. A communication method provided in this embodiment of this application includes the following steps.

S1401: The terminal is attached to an EPS, and creates a PDN connection.

S1402: The terminal sends a registration request (Registration Request) to an I-AMF.

Specifically, the terminal initiates a procedure of relocation from the 4G network to the 5G network, and sends a registration request to an NG-RAN device. The NG-RAN device selects an AMF based on a capacity (capacity) of an AMF to which the NG-RAN device is connected, and sends the registration request to the selected AMF. The AMF selected by the NG-RAN is assumed to be referred to as the I-AMF. Optionally, the registration request carries S-NSSAI requested (Requested) by the terminal.

Optionally, the registration request includes a UE status information element (information element). The I-AMF detects, based on the UE status information element in the registration request, that the terminal performs a 4G-to-5G mobility registration procedure. Specifically, the UE status information element includes a first flag bit, and the first flag bit identifies whether the terminal registered with the 4G network and a registration status (a registered state or an unregistered state) in the 4G network. If the terminal registered with the 4G network, and initiates a registration request to the 5G network, the I-AMF determines that step S1402 is the 4G-to-5G mobility registration procedure.

S1403: The I-AMF sends an identity request (Identity Request) to the terminal.

The identity request requests an identifier of the terminal. The identifier of the terminal may be, but is not limited to, an SUCI.

S1404: The terminal feeds back an identity response (Identity Response) to the I-AMF.

The identity response carries the identifier of the terminal.

S1405: The I-AMF obtains an SUPI of the terminal from the UDM.

The UDM has an AUSF function. A relationship between the SUPI and the SUCI is that the SUCI is formed by encrypting the SUPI.

Specifically, the I-AMF initiates an authentication procedure, and the I-AMF sends a fifth message to the UDM, where the fifth message includes encrypted identification information, for example, the SUCI of the terminal. The UDM decrypts the SUCI into the SUPI, and feeds back the SUPI of the terminal to the I-AMF.

S1406: The I-AMF obtains subscribed slice information of the terminal from the UDM based on the SUPI of the terminal.

Specifically, the I-AMF sends an Nudm_SDM_Get request message to the UDM, where the message carries the SUPI of the terminal. The UDM returns an Nudm_SDM_Get response message, where the message includes the subscribed slice information of the terminal.

S1407: The I-AMF determines, based on the subscribed slice information and requested slice information, whether a terminal service is supported.

In a possible implementation, the I-AMF obtains an intersection set of a requested slice and a subscribed slice, and determines, based on a locally configured slice, whether the I-AMF supports all slices in the intersection set. If the I-AMF supports all the slices in the intersection set, the terminal service is supported. Otherwise, the terminal service is not supported.

S1408: If the I-AMF does not support the terminal service, the I-AMF obtains information about a T-AMF from an NSSF.

In a possible implementation, the I-AMF sends an Nnssf_NSSelection_Request message to the NSSF, where the message carries requested S-NSSAI and subscribed S-NSSAI. The NSSF queries for the information about the T-AMF and feeds back the information about the T-AMF, for example, a name of T-AMF device, to the I-AMF based on the requested S-NSSAI and the subscribed S-NSSAI.

S1409: The I-AMF queries an NRF for an address of the T-AMF based on the information about the T-AMF.

In a possible implementation, the I-AMF obtains the address of the T-AMF from the NRF through an Nnrf_NF_Discovery procedure.

S1410: The I-AMF sends an Namf_Communication_N1MessageNotify message to the T-AMF.

Optionally, the message includes some information, for example, the requested S-NSSAI, in Registration 1_mRequest. Optionally, the message includes a user context. The user context includes a security context.

It can be noted that the T-AMF may trust some information from the I-AMF. For example, the I-AMF has performed authentication. Therefore, the security context obtained from the I-AMF is usually trustworthy. For another user context, for example, a mobility management (mobility management, MM) context, the T-AMF may obtain the context from an MME.

S1411: Continue to perform the relocation procedure.

Refer to steps S1307 to S1310 in FIG. 13B. The I-AMF does not obtain the slice information of the PDU session of the terminal from the MME. This is different from that in FIG. 13A and FIG. 13B.

In an existing 4G-to-5G relocation procedure, the I-AMF obtains the SUCI of the terminal in the user context by obtaining the user context from the MME. That is, the MME obtains the SUCI through steps 3 and 4 shown in FIG. 3A. In the embodiment corresponding to FIG. 14, the I-AMF obtains the SUCI of the terminal from the terminal. In other words, the I-AMF may not obtain the user context from the MME. In this way, a conventional-technology problem that signaling overheads are high because both the I-AMF and the T-AMF obtain the user context from the MME can be avoided.

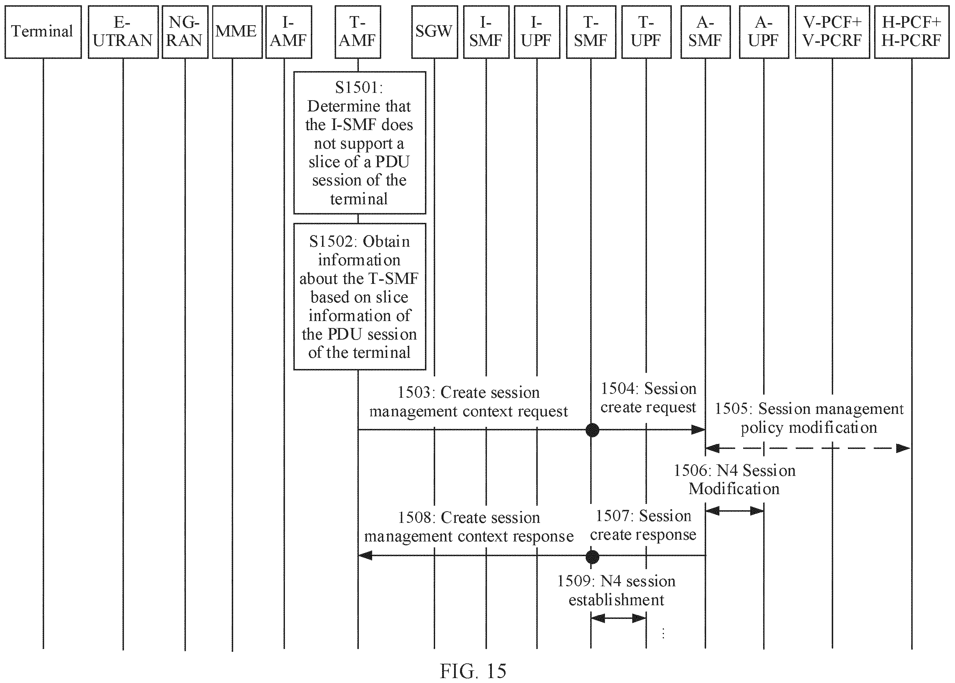

An embodiment of this application further provides a communication method. For example, an AMF is a re-allocated T-AMF (where in a scenario in which AMF re-allocation is not needed, the AMF may alternatively be an I-AMF), and an intermediate session management function network element is an I-SMF (where in some other embodiments, the intermediate session management function network element may alternatively be a V-SMF). Refer to FIG. 15, the method includes the following steps.

S1501: The T-AMF determines that the I-SMF does not support a slice of a PDU session of a terminal.

In a possible implementation, in a preparation phase of a handover procedure, the T-AMF receives slice information (S-NSSAI) of the PDU session of the terminal from an I-AMF in step 8a shown in FIG. 1B. The T-AMF determines, based on the slice information of the PDU session of the terminal, whether the I-SMF can serve the terminal. For example, the slice of the PDU session of the terminal is an eMBB-type slice, and needs a high bandwidth, and the I-SMF does not support a high-bandwidth slice. In this case, the T-AMF determines that the I-SMF does not support a terminal service. In this case, SMF relocation (or referred to as reselection) is needed, to relocate the terminal to an SMF that can support the terminal service.

S1502: The T-AMF obtains information about a T-SMF based on the slice information of the PDU session of the terminal.

When SMF relocation is needed, the T-AMF queries an NRF for the information about the T-SMF to which the terminal needs to be relocated. Specifically, the T-AMF sends Nnrf_NF_Discovery to the NRF, where the message carries a target TAI and the slice information of the PDU session of the terminal, to obtain an address of the T-SMF from the NRF.

S1503: The T-AMF sends a create session management context request (Nsmf_PDUSession_CreateSMContext Request) to the T-SMF.

The create session management context request requests to create a session resource.

S1504: The T-SMF sends a session create request (Nsmf_PDUSession_Create request) to an A-SMF.

This message requests the A-SMF to enable a PDN connection established by the terminal in a 4G network to migrate to a PDU session in a 5G network.

S1505: Session management policy (SM policy) modification procedure.

Optionally, the A-SMF exchanges signaling with a PCF, so that the SMF updates a session management policy, and notifies the PCF that the terminal is to be handed over to the 5G network.

S1506: N4 session modification procedure.

In this procedure, the A-SMF exchanges signaling with an anchor UPF to obtain N9 interface address information of the anchor UPF.

S1507: The A-SMF replies to the T-SMF with a session create response.

The session create response indicates that the PDN connection of the terminal has migrated to a 5G side.

Optionally, the session create response carries the slice information, for example, in-used S-NSSAI, corresponding to the PDU session of the terminal.

S1508: The T-SMF returns a create session management context response to the T-AMF.

The create session management context response indicates that the session has been handed over to the 5G side.

Optionally, the create session management context response carries the slice information, for example, the in-used S-NSSAI, of the PDU session of the terminal.

S1509: N4 session establishment procedure.

In a possible implementation, the T-SMF selects an intermediate UPF, namely, a T-UPF (a V-UPF in a roaming scenario) from a local configuration based on the slice information that is of the PDU session and that is obtained in step S1507 and the target TAI, and obtains an N9 interface address of the T-UPF by using the N4 session establishment procedure.

Then, a 4G-to-5G handover procedure continues to be performed. Refer to steps 9 to 15 in FIG. 1B and steps 1 to 13 in FIG. 2A and FIG. 2B.

According to the communication method provided in this embodiment of this application, in a scenario in which the I-SMF selected by default does not support the slice of the PDU session of the terminal and a data plane is unavailable, the AMF may perform SMF reselection, to relocate the terminal to the SMF that supports the slice of the PDU session of the terminal, to ensure service continuity in an interworking procedure.

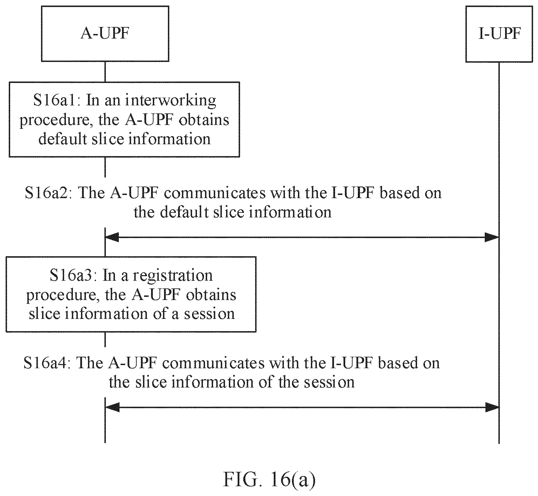

An embodiment of this application further provides a communication method. Refer to FIG. 16(a), the method includes the following steps.

S16a 1: In an interworking procedure, an A-UPF obtains default slice information.

For specific implementation of this step, refer to the following embodiment. For example, refer to step S1604.

S16a2: The A-UPF communicates with an I-UPF based on the default slice information.

When a terminal moves out of a service area of the A-UPF, the I-UPF is configured to forward service data between the A-UPF and an access network device to which the terminal is connected.

In a conventional technology, slice information of which the A-UPF usually learns is slice information of a real session, and the I-UPF learns of the default slice information. As a result, the A-UPF and the I-UPF communicate with each other by using different slices. To be specific, the A-UPF communicates with the I-UPF by using a real slice, and the I-UPF communicates with the A-UPF on a default slice. A tunnel between the A-UPF and the I-UPF may be unavailable. In this embodiment of this application, the A-UPF can learn of the default slice information. In this way, the A-UPF can communicate with the I-UPF by using the default slice, and the 1-UPF can also communicate with the A-UPF by using the default slice. The tunnel between the A-UPF and the I-UPF can be available, and a probability of a communication failure caused by tunnel unavailability is reduced.

Optionally, the method further includes the following steps.

S16a3: In a registration procedure, the A-UPF obtains slice information of a session.

S16a4: The A-UPF communicates with the I-UPF based on the slice information of the session.

In a registration procedure, according to the conventional technology, the I-UPF has learned of the slice information of the session. Therefore, in this embodiment of this application, it is considered that the slice information of the A-UPF is updated to the slice information of the session in the registration procedure through step S16a3. In this way, both the A-UPF and the I-UPF learn of the slice information of the session, and the A-UPF can communicate with the I-UPF by using the real session slice, and the tunnel between the A-UPF and the I-UPF can be available.

It may be understood that after a tunnel based on the real slice is established between the A-UPF and the I-UPF, the A-UPF may delete the default slice information, to release a related resource. Specifically, in the registration procedure, the A-UPF receives first indication information, where the first indication information indicates to delete the default slice information; and the A-UPF deletes the default slice information based on the first indication information.

According to the communication method provided in this embodiment of this application, the A-UPF may update the slice information of the A-UPF. Specifically, in the interworking procedure, the slice information of the A-UPF is updated to the default slice information, to be consistent with the slice information of the I-UPF in the interworking procedure. In the registration procedure, the slice information of the A-UPF is updated to the slice information of the real session, to be consistent with the slice information of the I-UPF in the registration procedure. In this way, in the interworking procedure, the A-UPF and the I-UPF can communicate with each other by using the default slice; and in the registration procedure, the A-UPF and the I-UPF can communicate with each other by using the real session slice, and it is ensured that the tunnel between the A-UPF and the I-UPF can be available.

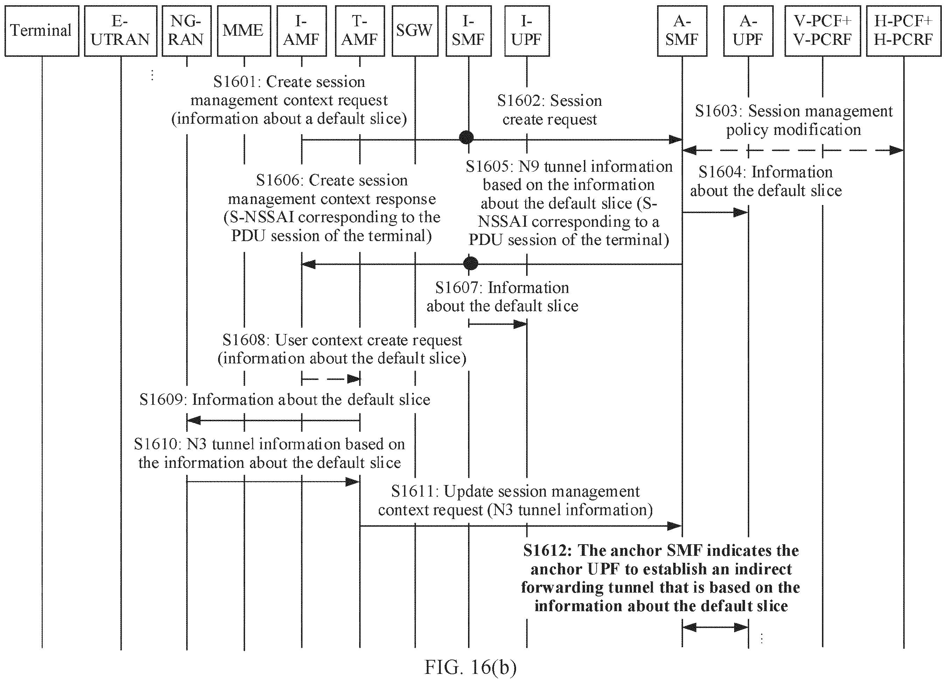

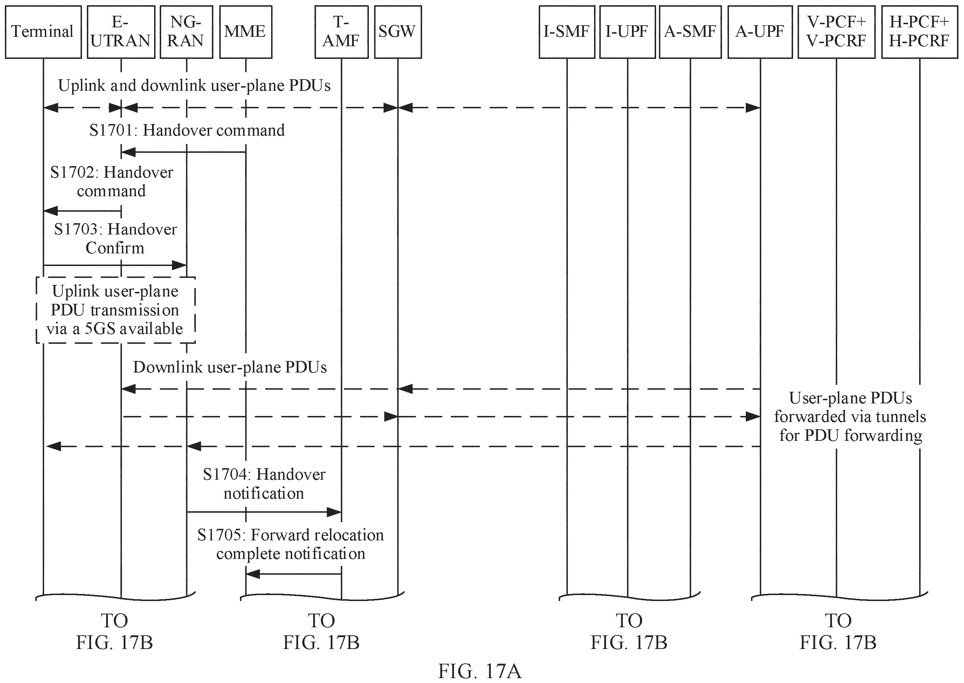

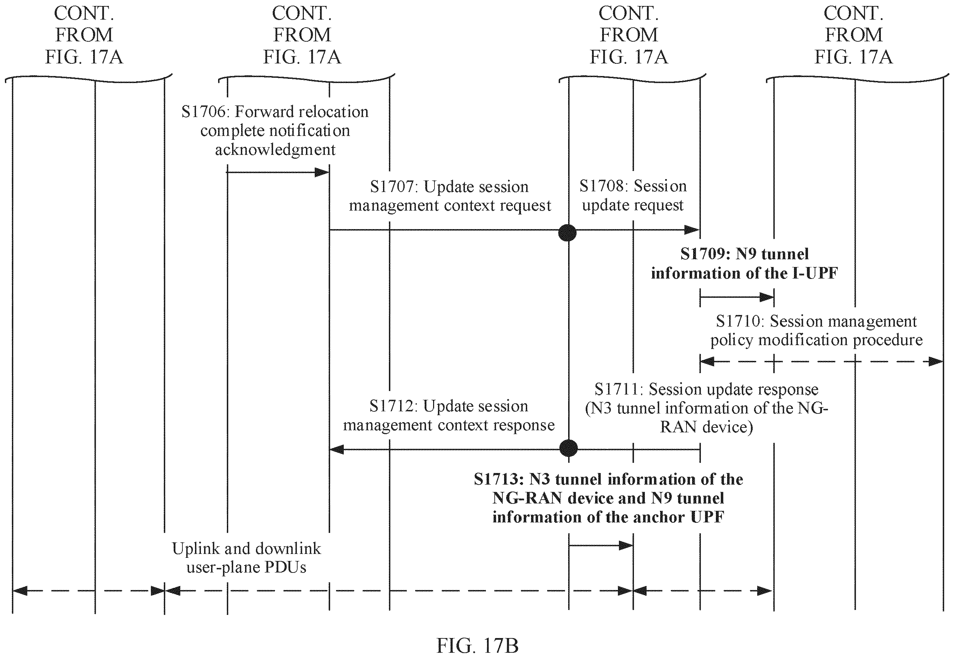

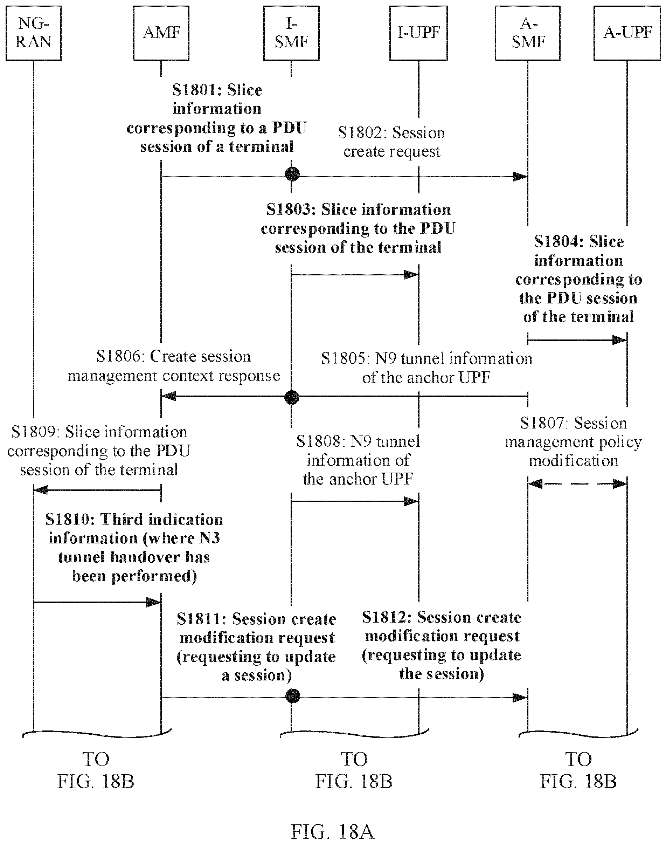

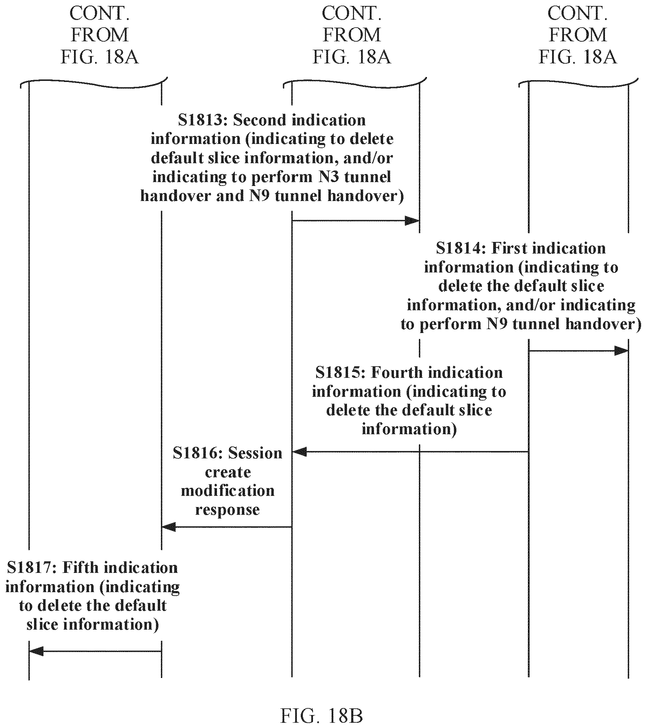

The following describes in detail the communication method shown in FIG. 16(a) with reference to FIG. 16(b), FIG. 17A, FIG. 17B, FIG. 18A, and FIG. 18B. Specifically, the communication method includes a handover preparation phase shown in FIG. 16(b), a handover execution phase shown in FIG. 17A and FIG. 17B, and a registration procedure shown in FIG. 18A and FIG. 18B. The method includes the following steps.

The preparation phase includes steps 1 to 3 shown in FIG. 1A, the following steps S1601 to S1612, and steps 13 to 15 shown in FIG. 1B.

S1601: An I-AMF sends a create session management context request to an I-SMF.

For this step, refer to step 4 shown in FIG. 1A.

Optionally, the create session management context request includes information about a default slice, for example, default NSSAI (default NSSAI). The default slice may be locally configured on the I-AMF and for 4G-5G interworking. The default slice may be inconsistent with a slice corresponding to a PDU session of a terminal.

It can be noted that, in an embodiment corresponding to FIG. 16(b), related steps of reselecting network elements such as an SMF (I-SMF or V-SMF) and a UPF are not shown, and actually, the step of re-allocating an SMF and/or a UPF may alternatively be included.

S1602: The I-SMF sends a session create request to an anchor SMF.

Optionally, the session create request includes one or more of the following information: an SUPI, a data network name (data network name, DNN), a PDU session identifier (PDU Session ID), an ID of the I-SMF, a PDU session type (PDU Session Type), user location information (User location information), and an EPS interworking support indication (EPS interworking support indication).

S1603: Session management policy modification procedure.

Refer to step 5 shown in FIG. 1A.

S1604: The A-SMF sends the information about the default slice to an anchor UPF.

In this embodiment of this application, information about the default slice for 4G-5G interworking is configured on the A-SMF. The information about the default slice is the same as that of the default slice configured on the I-AMF.

In a possible implementation, the A-SMF initiates an N4 session modification procedure to the anchor UPF. Optionally, in the N4 session modification procedure, the A-SMF sends the information about the default slice to the anchor UPF.

Optionally, in the N4 session modification procedure, an SMF is configured to allocate N9 tunnel information. Specifically, the SMF allocates the N9 tunnel information based on the default slice, and sends the allocated N9 tunnel information to a UPF. Optionally, the SMF delivers a packet detection rule (packet detection rule, PDR) to the anchor UPF. PDR is for traffic classification.

The N9 tunnel information includes a fully qualified tunnel endpoint identifier (Fully Qualified TEID, F-TEID). The F-TEID includes a tunnel TEID and a tunnel IP. Subsequently, information may be transmitted between an I-UPF and the anchor UPF through an N9 tunnel.

Alternatively, optionally, in the N4 session modification procedure, the anchor UPF is configured to allocate N9 tunnel information. Specifically, the anchor UPF allocates the N9 tunnel information based on the received information about the default slice, and sends the N9 tunnel information to the A-SMF.

S1605: The A-SMF sends N9 tunnel information of a UPF to the I-SMF.

In a possible implementation, the A-SMF sends a session create response to the I-SMF, where the session create response carries N9 tunnel information (allocated by the anchor UPF or the A-SMF) on an anchor UPF side. The N9 tunnel is a core network tunnel (CN Tunnel).

Subsequently, the I-SMF sends the N9 tunnel information on the anchor UPF side to the I-UPF, so that the I-UPF sends user plane data of the terminal to the anchor UPF.

Optionally, the session create response includes S-NSSAI corresponding to the PDU session of the terminal.

S1606: The I-SMF returns a create session management context response to the I-AMF.

Optionally, the create session management context response includes the S-NSSAI corresponding to the PDU session of the terminal.

S1607: The I-SMF sends the information about the default slice to the I-UPF.

In a possible implementation, in step S1601, the I-SMF obtains the information about the default slice from the I-AMF, and then the I-SMF initiates an N4 session establishment procedure to the I-UPF. In the N4 session establishment procedure, the I-SMF sends the information about the default slice to the I-UPF.

Optionally, in the N4 session establishment procedure, the I-SMF is configured to allocate N9 tunnel information of the I-UPF. Specifically, the I-SMF allocates the N9 tunnel information based on the information about the default slice, and sends the N9 tunnel information that is based on the information about the default slice to the I-UPF.

Optionally, the I-SMF sends the PDR of the PDU session of the terminal, CN tunnel information (for example, the N9 tunnel information of the anchor UPF), and a forwarding action rule (forwarding action rule, FAR) to the I-UPF. The FAR indicates whether information is forwarded, discarded, or buffered.

S1608: The I-AMF sends a user context create request to a T-AMF.

It can be understood that, after receiving the S-NSSAI of the PDU session of the terminal, the I-AMF determines whether the I-AMF can support the PDU session of the terminal. If the I-AMF does not support the PDU session of the terminal, the I-AMF performs AMF re-allocation, to relocate the terminal to a T-AMF that can serve the terminal (that is, support the slice corresponding to the PDU session of the terminal).

Optionally, the user context create request includes the information about the default slice.

This step is optional.

S1609: The T-AMF sends the information about the default slice to an NG-RAN device.

In a possible implementation, the T-AMF sends a handover request (Handover Request) to the NG-RAN device, where the handover request includes the information about the default slice.

S1610: The NG-RAN device sends, to the T-AMF, N3 tunnel information (N3 Tunnel Info) that is based on the information about the default slice.

In a possible implementation, after receiving the information about the default slice, the NG-RAN device allocates the N3 tunnel information based on the information about the default slice, and feeds back a handover request acknowledgment (Handover Request ACK) to the T-AMF, where the handover request acknowledgment includes the N3 tunnel information. The N3 tunnel information includes one or more of the following information: a tunnel IP address and a TEID. An N3 tunnel is a core network tunnel.

In a subsequent procedure, the N3 tunnel information of the NG-RAN device is sent to the I-UPF, so that when the user plane data of the terminal arrives, the I-UPF knows a forwarding path of the user plane data. That is, the user plane data is sent to the NG-RAN device.

S1611: The T-AMF sends an update session management context request (Nsmf_ PDUSession _UpdateSMContext Request) to the A-SMF.

The update session management context request includes the N3 tunnel information (allocated by the NG-RAN device) of the NG-RAN device. The update session management context request indicates to update the N3 tunnel information, so that the N3 tunnel between the NG-RAN device and the I-UPF is established subsequently.

S1612: The A-SMF indicates the A-UPF to establish an indirect forwarding tunnel that is based on the information about the default slice.

In a possible implementation, the A-SMF initiates the N4 session modification procedure to the anchor UPF. In the procedure, the A-SMF notifies the anchor UPF of the N3 tunnel information of the NG-RAN device, and notifies the anchor UPF to establish the indirect forwarding tunnel. The anchor UPF establishes an indirect forwarding tunnel between the I-UPF and the NG-RAN device based on the N3 tunnel information (based on the information about the default slice), and establishes an indirect forwarding tunnel between the anchor UPF and the I-UPF based on the N9 tunnel information (based on the information about the default slice) of the I-UPF.

It is easy to understand that, after handover starts, when the terminal has been out of a service area of the E-UTRAN device, a data packet buffered in the E-UTRAN device may be sent to the NG-RAN device through the indirect forwarding tunnel, that is, by using the anchor UPF and the I-UPF.

Currently, in a handover procedure, the I-AMF selects the I-SMF based on the information about the default slice for interworking, and sends the information about the default slice to the I-SMF. In the N4 session establishment procedure, the I-SMF sends the information about the default slice to the selected I-UPF. In a PDN connection establishment procedure, the A-SMF allocates, to the terminal, real slice information, that is, slice information corresponding to the PDU session of the terminal. In the N4 session modification procedure, the A-SMF sends the real slice information to the anchor UPF. It can be learned that slice information of different network elements may be inconsistent. For example, the I-UPF has the information about the default slice, and the anchor UPF has the real slice information. In this case, due to isolation between different slices, the I-UPF and the anchor UPF cannot be connected to each other, and communication between the I-UPF and the anchor UPF fails.

According to the procedure corresponding to FIG. 16(b), all end-to-end network elements learn of the information about the default slice. Specifically, the information about the default slice is configured on the I-AMF and the A-SMF. The I-AMF sends the information about the default slice to the I-SMF in step S1601, and sends the information about the default slice to the T-AMF in step S1608, and the T-AMF sends the information about the default slice to the NG-RAN device in step S1609. The I-SMF sends the information about the default slice to the I-UPF in step S1607. The A-SMF sends the information about the default slice to the anchor UPF in step S1604. In this way, the network elements may communicate with each other by using the default slice. This avoids a communication failure caused by inconsistent slices of the network elements.

Next, as shown in FIG. 17A and FIG. 17B, the execution phase includes the following steps S1701 to S1715.

For S1701 to S1703, refer to steps 1 to 3 shown in FIG. 2A. A terminal indicates, over an air interface, to an NG-RAN device that the terminal has been handed over to a target cell.

S1704: The NG-RAN device sends a handover notification (Handover Notification) to a T-AMF.

The handover notification indicates, to the T-AMF, that the terminal has been handed over to the NG-RAN device. The handover notification carries N3 tunnel information of the NG-RAN. The N3 tunnel information is generated based on default slice information.

S1705: The T-AMF sends a forward relocation complete notification (Forward Relocation Complete Notification) to an MME.

The forward relocation completion notification indicates that the terminal has been handed over to a 5GS.

S1706: The MME replies to the T-AMF with a forward relocation complete notification acknowledgment (Forward Relocation Complete Notification ACK).

S1707: The T-AMF sends an update session management context request (Nsmf_ PDUSession _UpdateSMContext Request) to an I-SMF.

S1708: The I-SMF sends a session update request (Nsmf_PDUSession_Update Request) to an A-SMF.

For specific implementation of steps S1706 to S1708, refer to a conventional technology.

S1709: The A-SMF sends N9 tunnel information of an I-UPF to an anchor UPF.

In a possible implementation, an N4 session modification (N4 session modification) procedure is initiated, and the N9 tunnel information of the I-UPF is sent to the anchor UPF, to establish a downlink forwarding path of an N9 tunnel. The N9 tunnel information is generated based on a default slice.

S1710: Session management policy modification procedure.

It may be understood that, in a dynamic policy control and charging (policy control and charging, PCC) scenario, the A-SMF triggers the session management policy modification procedure to a PCF. The A-SMF notifies the PCF of changes of a radio access technology (radio access technology, RAT) type and a location (Location) of the terminal.

This step is optional.

S1711: The A-SMF feeds back a session update response to the I-SMF.

Optionally, the session update response includes the N3 tunnel information of the NG-RAN device.

S1712: The I-SMF replies to the T-AMF with an update session management context response (Nsmf_PDUSession_UpdateSMContext Response).

The update session management context response indicates that the handover is completed. Optionally, the update session management context response includes a PDU session ID.

S1713: The I-SMF sends the N3 tunnel information of the NG-RAN device and N9 tunnel information of the anchor UPF to the I-UPF.

Specifically, the I-SMF sends, to the I-UPF, the N3 tunnel information allocated by the NG-RAN device, to establish a downlink forwarding path of an N3 tunnel. The I-SMF sends the N9 tunnel information of the anchor UPF to the I-UPF, to establish an uplink forwarding path of the N9 tunnel, namely, a forwarding path to the anchor UPF. Herein, both the N3 tunnel information of the NG-RAN device and the N9 tunnel information of the anchor UPF are generated based on the default slice information.

Next, as shown in FIG. 18A and FIG. 18B, the registration procedure after the handover procedure includes the following steps.

S1801: An AMF sends, to an I-SMF, slice information corresponding to a PDU session of a terminal.

In a scenario in which AMF re-allocation is performed, the AMF refers to the foregoing T-AMF. In a scenario in which AMF re-allocation is not performed, the AMF refers to the foregoing I-AMF.

In a possible implementation, the AMF sends a create session management context request to the I-SMF, where the create session management context request includes the slice information of the PDU session of the terminal. The create session management context request indicates the I-SMF to update a session.

S1802: The I-SMF sends a session create request to an A-SMF.

S1803: The I-SMF sends, to an I-UPF, the slice information corresponding to the PDU session of the terminal.

In a possible implementation, the I-SMF initiates an N4 session establishment procedure to the I-UPF. In the N4 session establishment procedure, the 1-SMF sends, to the I-UPF, the slice information corresponding to the PDU session of the terminal.

Optionally, the I-SMF generates N9 tunnel information of the I-UPF based on the slice information corresponding to the PDU session of the terminal, and sends the N9 tunnel information to the 1-UPF.

Alternatively, optionally, the I-UPF generates N9 tunnel information based on the received slice information corresponding to the PDU session of the terminal.

It can be noted that, although the I-UPF has generated the N9 tunnel information that is based on a real slice of the session, because a tunnel based on the real slice has not been established yet, the I-UPF continues to use a tunnel established based on default slice information, to send and receive data.

S1804: The A-SMF sends, to an anchor UPF, the slice information corresponding to the PDU session of the terminal.

In a possible implementation, the A-SMF initiates an N4 session modification procedure to the anchor UPF. In the procedure, the A-SMF sends, to the anchor UPF, the slice information corresponding to the PDU session of the terminal.

Optionally, the A-SMF generates N9 tunnel information of the anchor UPF based on the slice information corresponding to the PDU session of the terminal, and sends the N9 tunnel information to the anchor UPF.

Alternatively, optionally, the anchor UPF generates N9 tunnel information based on the received slice information corresponding to the PDU session of the terminal.

The anchor UPF establishes a core network tunnel based on the slice information corresponding to the PDU session of the terminal, for example, creates an N9 tunnel between the anchor UPF and the I-UPF. To be specific, the anchor UPF has two types of tunnels: One is a tunnel that is based on the default slice information, and the other is a tunnel that is based on real session slice information. The anchor UPF first uses the tunnel that is based on the default slice information, to perform communication.

S1805: The A-SMF sends the N9 tunnel information of the anchor UPF to the I-SMF.

In a possible implementation, the A-SMF sends a session create response to the I-SMF, where the session create response includes the N9 tunnel information of the anchor UPF. The N9 tunnel information is generated based on the slice information corresponding to the PDU session of the terminal.

S1806: The I-SMF sends a create session management context response to the AMF.

S1 807: Session management policy modification.

This step is optional.

S1808: The I-SMF sends the N9 tunnel information of the anchor UPF to the I-UPF.

In this way, an uplink forwarding path of the N9 tunnel can be established.

S1809: The AMF sends, to an NG-RAN device, the slice information corresponding to the PDU session of the terminal.

In a possible implementation, the AMF sends an N2 SM message to the NG-RAN device, where the N2 SM message includes the slice information of the PDU session. Optionally, the N2 SM message further includes N3 tunnel information of the I-UPF.

S1810: The NG-RAN device sends third indication information to the AMF.

The third indication information indicates that N3 tunnel handover has been performed.

It can be understood that the NG-RAN device creates an N3 tunnel based on the received slice information of the PDU session of the terminal. In this way, the NG-RAN device hands over uplink data of the terminal from an old N3 tunnel that is based on the default slice information to a new N3 tunnel that is based on the real slice information, and feeds back the third indication information to the AMF, to notify the AMF that the uplink data of the terminal has been handed over to the new N3 tunnel.

S1811: The AMF sends a session create modification request (session create modification request) to the I-SMF.

The session create modification request requests to update a session, indicates that the NG-RAN device has performed N3 tunnel handover, and/or indicates to update tunnel information.

S1812: The I-SMF sends a session create modification request to the A-SMF.

The session create modification request requests to update the session, and/or indicates that the NG-RAN device has performed N3 tunnel handover.

S1813: The I-SMF sends second indication information to the I-UPF.

The second indication information indicates the I-UPF to delete the default slice information, and/or indicates the I-UPF to perform N3 tunnel handover and N9 tunnel handover. Specifically, the I-LTPF hands over downlink data of the terminal from the N3 tunnel created based on the default slice information to the N3 tunnel created based on the real slice information, and sends the downlink data to the NG-RAN device; and hands over the uplink data of the terminal from an N9 tunnel created based on the default slice information to an N9 tunnel created based on the real slice information, and sends the uplink data to the anchor UPF.

In a possible implementation, after receiving the session create modification request, the I-SMF learns that the NG-RAN device has performed N3 tunnel handover. In this way, the I-SMF initiates the N4 session modification procedure to the I-UPF. In the procedure, the I-SMF sends the second indication information to the I-UPF, to indicate the I-UPF to perform N3 tunnel handover and N9 tunnel handover.

S1814: The A-SMF sends first indication information to the anchor UPF.

The first indication information indicates the anchor UPF to delete the default slice information, and/or indicates the anchor UPF to perform N9 tunnel handover. Specifically, the anchor UPF hands over the downlink data of the terminal from the N9 tunnel created based on the default slice information to the N9 tunnel created based on the real slice information, and sends the downlink data to the I-UPF.

In a possible implementation, the A-SMF initiates the N4 session modification procedure to the anchor UPF. In the procedure, the A-SMF sends the first indication information to the anchor UPF.

It can be understood that the anchor UPF sends the downlink data by using the tunnel that is based on the real slice information.

S1815: The A-SMF sends fourth indication information to the I-SMF.

The fourth indication information indicates the I-SMF to delete the default slice information.

In a possible implementation, the A-SMF sends a session create modification response to the I-SMF, where the session create modification response carries the fourth indication information.

S1816: The I-SMF sends the session create modification response to the AMF.

S1817: The AMF sends fifth indication information to the NG-RAN device.

The fifth indication information indicates the NG-RAN device to delete the default slice information.

In the embodiment corresponding to FIG. 18A and FIG. 18B, in the registration procedure, all end-to-end network elements can update slice information to the real slice information, namely, the slice information corresponding to the PDU session of the terminal. In this way, in a subsequent communication procedure, network elements may communicate with each other by using the real slice. Because the network elements communicate with each other based on a same slice, it can be ensured that a tunnel is available. For example, if slices of the I-UPF and the anchor UPF are the same (for example, both are of an eMBB type), the I-UPF and the anchor UPF can be connected to each other. In addition, in a design manner, after a tunnel corresponding to the real slice is established, in addition to the AMF and the A-SMF on which the default slice information is preconfigured, other network elements (the NG-RAN device, the I-SMF, the I-UPF, and the anchor UPF) each delete the default slice information. In this way, a tunnel resource corresponding to a default slice can be released.

According to the communication method provided in this embodiment of this application, in a scenario in which the I-SMF selected by the AMF by default does not support the slice of the PDU session of the terminal and a data plane is unavailable, intermediate SMF reselection may not be performed. The A-SMF supports both the tunnel of the default slice and the tunnel of the real slice. During interworking, end-to-end network elements first use the tunnel of the default slice to perform communication, then update the default slice to the real slice in the registration procedure after interworking is completed, and use the tunnel of the real slice to perform communication. In this way, in both the handover procedure and the registration procedure, the data plane can be available, so that a probability of a communication failure caused by data plane unavailability is reduced.

It can be understood that the solutions in embodiments of this application may be appropriately combined for use, and explanations or descriptions of the terms in embodiments may be mutually referenced or explained in embodiments. This is not limited.

It can be further understood that, in various embodiments of this application, sequence numbers of the foregoing processes do not mean an execution sequence. An execution sequence of the processes should be determined based on functions and internal logic of the processes, and should not constitute any limitation on an implementation process of embodiments of this application.

It may be understood that, to implement a function in any one of the foregoing embodiments, the I-AMF, the T-AMF, the MME, the A-UPF, or another network device (for example, the PCF network element) includes a corresponding hardware structure and/or software module for performing each function. A person skilled in the art can be quite easily aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the functions of each particular application, but it should not be considered that the implementation goes beyond the scope of this application.

In embodiments of this application, division into functional modules may be performed on a device such as the I-AMF, the T-AMF, the MME, the A-UPF, or the another network device (for example, the PCF network element). For example, each functional module may be obtained through division corresponding to each function, or two or more functions may be integrated in one processing module. The integrated module may be implemented in a form of hardware, or may be implemented in a form of a software functional module. It can be noted that, in embodiments of this application, division into the modules is an example, and is merely logical function division. Another division manner may be used during actual implementation.

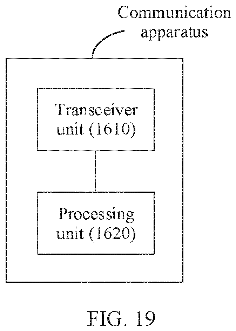

For example, when functional modules are obtained through division in an integrated manner, FIG. 19 is a block diagram of a structure of a communication apparatus according to an embodiment of this application. The communication apparatus may be an I-AMF or an apparatus (for example, but not limited to, a chip system) supporting an I-AMF function, a T-AMF or an apparatus supporting a T-AMF function, an MME or an apparatus supporting an MME function, or an A-UPF or an apparatus supporting an A-UPF function. The communication apparatus may include a transceiver unit 1610 and a processing unit 1620.

When the communication apparatus is the I-AMF or the apparatus supporting the I-AMF function, the transceiver unit 1610 is configured to support the communication apparatus in performing the foregoing steps S801, S802, S803, S901, and S1003, and/or is configured to perform another process of the technology in this specification. The processing unit 1620 is configured to assist the communication apparatus in determining whether the communication apparatus supports a slice service needed by a terminal, and/or is configured to perform another process of the technology in this specification.

When the communication apparatus is the T-AMF or the apparatus supporting the T-AMF function, the transceiver unit 1610 is configured to support the communication apparatus in performing the foregoing steps S801, S802, S803, S1008, and S1104, and/or is configured to perform another process of the technology in this specification. The processing unit 1620 is configured to assist the communication apparatus in performing step S1105, and/or is configured to perform another process of the technology in this specification.

When the communication apparatus is the MME or the apparatus supporting the MME function, the transceiver unit 1610 is configured to support the communication apparatus in performing the foregoing steps S1208 and S1308, and/or is configured to perform another process of the technology in this specification. The processing unit 1620 is configured to assist the communication apparatus in performing step S1204, and/or is configured to perform another process of the technology in this specification.

When the communication apparatus is the A-UPF or the apparatus supporting the A-UPF function, the transceiver unit 1610 is configured to support the communication apparatus in performing the foregoing steps S16a1, S16a3, and S1604, and/or is configured to perform another process of the technology in this specification. The processing unit 1620 is configured to control the transceiver unit 1610 to implement a transceiver function, and/or is configured to perform another process of the technology in this specification.

Optionally, the communication apparatus further includes a storage unit (not shown in FIG. 19). The storage unit is configured to store program code and data of the communication apparatus. The data may include but is not limited to original data, intermediate data, or the like.

In a possible manner, the processing unit 1620 may be a controller or the processor 401 or the processor 408 shown in FIG. 7, for example, may be a central processing unit (Central Processing Unit, CPU), a general-purpose processor, a digital signal processor (Digital Signal Processor, DSP), an application specific integrated circuit (Application Specific Integrated Circuit, ASIC), a field-programmable gate array (Field-Programmable Gate Array, FPGA) or another programmable logic device, a transistor logic device, a hardware component, or any combination thereof. The processing unit 1620 may implement or execute various example logical blocks, modules, and circuits described with reference to content disclosed in this application. Alternatively, the processor may be a combination of processors implementing a computing function, for example, a combination of one or more microprocessors or a combination of a DSP and a microprocessor. The transceiver unit 1610 may be the communication interface 404 shown in FIG. 7, or may be a transceiver circuit or the like. The storage unit may be the memory 403 shown in FIG. 7.

A person of ordinary skill in the art may understand that all or some of the foregoing embodiments may be implemented by using software, hardware, firmware, or any combination thereof. When software is for implementing embodiments, all or some of embodiments may be implemented in a form of a computer program product. The computer program product includes one or more computer instructions. When computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid state disk (Solid State Disk, SSD)), or the like.

In the several embodiments provided in this application, it can be understood that the disclosed system, apparatus, and method may be implemented in other manners. For example, the foregoing apparatus embodiment is merely an example. For example, division into the units is merely logical function division, and may be other division in actual implementation. For example, a plurality of units or components may be combined, or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical or other forms.

The units described as separate parts may or may not be physically separate, and parts displayed as units may or may not be physical units, and may be located at one location, or may be distributed on a plurality of network devices (for example, terminal devices). Some or all of the units may be selected based on an actual requirement to achieve the objectives of the solutions in embodiments.

In addition, functional units in embodiments of this application may be integrated into one processing unit, each functional unit may exist alone, or two or more units may be integrated into one unit. The integrated unit may be implemented in a form of hardware, or may be implemented in a form of a combination of hardware and a software function unit.

Based on the descriptions of the foregoing implementations, a person skilled in the art may clearly understand that this application may be implemented by using software in addition to necessary universal hardware, or certainly may be implemented by using hardware. However, in most cases, the former is a better implementation. Based on such an understanding, the technical solutions in this application essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods in embodiments of this application.

The foregoing descriptions are merely specific implementations of this application, but the protection scope of this application is limited thereto. Any variation or replacement within the technical scope disclosed in this application shall fall within the protection scope of this application. Therefore, the protection scope of this application shall be subject to the protection scope of the claims.

## Claims

1. A communication method, wherein the method comprises:
obtaining slice information of a session;
sending a first message to a network function repository function network element, wherein the first message comprises the slice information of the session, the first message requests identification information of an intermediate session management function network element, the intermediate session management function network element is configured to manage an intermediate user plane function network element, and the intermediate user plane function network element is configured to forward service data between an access network device to which a terminal is connected and an anchor user plane function network element when the terminal moves out of a service area of the anchor user plane function network element and a service area of an anchor session management function network element; and
receiving the identification information of the intermediate session management function network element from the network function repository function network element.

2. The communication method according to claim 1, wherein
when an initial access and mobility management function network element supports the slice information of the session, the method is performed by the initial access and mobility management function network element; or
when an initial access and mobility management function network element does not support the slice information of the session, the method is performed by a target access and mobility management function network element.

3. The communication method according to claim 1, wherein an initial access and mobility management function network element obtains the slice information of the session, a target access and mobility management function network element sends the first message to the network function repository function network element, and the target access and mobility management function network element receives the identification information of the intermediate session management function network element from the network function repository function network element.

4. The communication method according to claim 3, wherein the method further comprises:
sending, by the initial access and mobility management function network element, a second message to the network function repository function network element, wherein the second message is for querying for identification information of the target access and mobility management function network element; and
receiving, by the initial access and mobility management function network element, the identification information of the target access and mobility management function network element from the network function repository function network element.

5. The communication method according to any one of claims 1 to 4, wherein the terminal corresponds to at least one session, each session corresponds to one anchor session management function network element, and the session corresponds to one piece of slice information; and
the obtaining slice information of a session comprises: receiving slice information of the at least one session from an anchor session management function network element corresponding to the at least one session.

6. The communication method according to claim 5, wherein the receiving slice information of the session from an anchor session management function network element comprises:
receiving a session context from the anchor session management function network element, wherein the session context comprises the slice information of the session corresponding to the anchor session management function network element.

7. The communication method according to any one of claims 1 to 4, wherein the obtaining slice information of a session comprises:
receiving the slice information of the session from a mobility management entity.

8. The communication method according to claim 7, wherein the receiving the slice information of the session from a mobility management entity comprises:
receiving a user context from the mobility management entity, wherein the user context comprises the slice information of the session.

9. A communication method, wherein the method comprises:
sending, by an initial access and mobility management function network element, a third message to a terminal, wherein the third message requests identification information of the terminal;
receiving, by the initial access and mobility management function network element, the identification information of the terminal from the terminal;
sending, by the initial access and mobility management function network element, a fourth message to a unified data management network element, wherein the fourth message comprises identification information of the terminal; and
receiving, by the initial access and mobility management function network element, subscribed slice information of the terminal from the unified data management network element.

10. The communication method according to claim 9, wherein the identification information of the terminal is unencrypted identification information.

11. The communication method according to claim 9, wherein the identification information received from the terminal is encrypted identification information, and the identification information comprised in the fourth message is decrypted identification information; and
the method further comprises:
sending, by the initial access and mobility management function network element, a fifth message to the unified data management network element, wherein the fifth message comprises the encrypted identification information, and the fifth message is for obtaining the decrypted identification information; and
receiving, by the initial access and mobility management function network element, the decrypted identification information from the unified data management network element.

12. A communication method, wherein the method comprises:
obtaining, by a mobility management entity, slice information of a session; and
sending, by the mobility management entity, the slice information to an initial access and mobility management function network element or a target access and mobility management function network element.

13. The communication method according to claim 12, wherein the obtaining, by a mobility management entity, slice information of a session comprises:
receiving, by the mobility management entity, a session create response from an anchor session management function network element, wherein the session create response comprises the slice information.

14. The communication method according to claim 12 or 13, wherein the sending, by the mobility management entity, the slice information comprises:
sending, by the mobility management entity, a user context, wherein the user context comprises the slice information.

15. The communication method according to any one of claims 12 to 14, wherein the method further comprises:
sending, by the mobility management entity, the slice information to a domain name server; and
receiving, by the mobility management entity, identification information of the initial access and mobility management function network element from the domain name server.

16. A communication method, comprising:
obtaining, by an anchor user plane function network element, default slice information in an interworking procedure; and
communicating, by the anchor user plane function network element, with an intermediate user plane function network element based on the default slice information, wherein
when a terminal moves out of a service area of the anchor user plane function network element, the intermediate user plane function network element is configured to forward service data between the anchor user plane function network element and an access network device to which the terminal is connected.

17. The communication method according to claim 16, wherein the method further comprises:
obtaining, by the anchor user plane function network element, slice information of a session in a registration procedure; and
communicating, by the anchor user plane function network element, with the intermediate user plane function network element based on the slice information of the session.

18. The communication method according to claim 16 or 17, wherein the method further comprises:
receiving, by the anchor user plane function network element, first indication information in the registration procedure, wherein the first indication information indicates to delete the default slice information; and
deleting, by the anchor user plane function network element, the default slice information based on the first indication information.

19. A communication apparatus, comprising a processor and a memory, wherein
the memory is configured to store computer-executable instructions; and when the communication apparatus runs, the processor executes the computer-executable instructions stored in the memory, so that the communication apparatus performs the communication method according to any one of claims 1 to 8.

20. A communication apparatus, comprising a processor and a memory, wherein
the memory is configured to store computer-executable instructions; and when the communication apparatus runs, the processor executes the computer-executable instructions stored in the memory, so that the communication apparatus performs the communication method according to any one of claims 9 to 11.

21. A communication apparatus, comprising a processor and a memory, wherein
the memory is configured to store computer-executable instructions; and when the communication apparatus runs, the processor executes the computer-executable instructions stored in the memory, so that the communication apparatus performs the communication method according to any one of claims 12 to 15.

22. A communication apparatus, comprising a processor and a memory, wherein
the memory is configured to store computer-executable instructions; and when the communication apparatus runs, the processor executes the computer-executable instructions stored in the memory, so that the communication apparatus performs the communication method according to any one of claims 16 to 18.

23. A communication system, comprising:
an initial access and mobility management function network element, configured to obtain slice information of a session, and send the slice information of the session to a target access and mobility management function network element; and
the target access and mobility management function network element, configured to receive the slice information of the session from the initial access and mobility management function network element, wherein
the target access and mobility management function network element is further configured to send a first message to a network function repository function network element, wherein the first message comprises the slice information of the session, the first message requests identification information of an intermediate session management function network element, the intermediate session management function network element is configured to manage an intermediate user plane function network element, and the intermediate user plane function network element is configured to forward service data between an access network device to which a terminal is connected and an anchor user plane function network element when the terminal moves out of a service area of the anchor user plane function network element and a service area of an anchor session management function network element; and
the target access and mobility management function network element is further configured to receive the identification information of the intermediate session management function network element from the network function repository function network element.

24. The communication system according to claim 23, wherein
the initial access and mobility management function network element is further configured to send a second message to the network function repository function network element, wherein the second message is for querying for identification information of the target access and mobility management function network element; and
the initial access and mobility management function network element is further configured to receive the identification information of the target access and mobility management function network element from the network function repository function network element.

25. The communication system according to claim 23 or 24, wherein the terminal corresponds to at least one session, each session corresponds to one anchor session management function network element, and the session corresponds to one piece of slice information; and
that the initial access and mobility management function network element is configured to obtain the slice information of the session comprises: receiving slice information of the at least one session from an anchor session management function network element corresponding to the at least one session.

26. The communication system according to claim 25, wherein receiving the slice information of the session from the anchor session management function network element comprises:
receiving a session context from the anchor session management function network element, wherein the session context comprises the slice information of the session corresponding to the anchor session management function network element.

27. The communication system according to any one of claims 23 to 26, wherein that the initial access and mobility management function network element is configured to obtain the slice information of the session comprises:
receiving the slice information of the session from a mobility management entity.

28. The communication system according to claim 27, wherein receiving the slice information of the session from the mobility management entity comprises:
receiving a user context from the mobility management entity, wherein the user context comprises the slice information of the session.

29. A communication system, wherein the communication system comprises the communication apparatus according to claim 19 and the communication apparatus according to claim 21.

30. A computer-readable storage medium, comprising a program or instructions, wherein when the program or the instructions are executed, the method according to any one of claims 1 to 8 is implemented, the method according to any one of claims 9 to 11 is implemented, the method according to any one of claims 12 to 15 is implemented, or the method according to any one of claims 16 to 18 is implemented.
